# EUROPEAN PATENT SPECIFICATION

(11) **EP 0 593 545 B1**
(45) Date of publication and mention of the grant of the patent: **10.05.1995**
(21) Application number: 92913726.3
(22) Date of filing: 29.06.1992
(51) Int. Cl.: H02K 49/10, F02B 75/32

(54) **MAGNETIC DEVICE FOR CONVERTING RECIPROCATING INTO ROTATING MOTION**
MAGNETISCHE EINRICHTUNG ZUM UMWANDELN EINER HIN- UND HERBEWEGUNG IN DREHBEWEGUNG
DISPOSITIF MAGNETIQUE CONVERTISSANT UN MOUVEMENT DE VA-ET-VIENT EN UN MOUVEMENT ROTATIF

(30) Priority: 03.07.1991 CH 1978/91
(43) Date of publication of application: 27.04.1994
(73) Proprietor: RIGAZZI, Pier Andrea, CH-6982 Agno (CH)
(72) Inventor: RIGAZZI, Pier Andrea, CH-6982 Agno (CH)
(74) Representative: Baggiolini, Raimondo
(86) International application number: PCT/EP92/01462
(87) International publication number: WO 93/01647

(56) References cited:
- EP-A- 0 152 252
- FR-A- 2 307 132
- GB-A- 747 682
- GB-A- 2 219 671
- US-A- 3 992 132
- US-A- 4 794 901

## Description

The Subject of the present invention is a method that, as far as its inventor knows, is conceptually new. Basing himself on the studies on dynamics of magnetized elements he tried, by means of the invention to offer a system which may have several different uses e.g. for car engines, for industrial vehicles engines, more generally for propulsion and, for example, for electrical current generators.

The apparatuses adapt to realize the above method, which constitute also the subject of the invention, offer important and, given the novelty of the concepts, unusual advantages, which will be explained in the following description.

The application describes a method for moving a first member or group of members along a trajectory, by moving a second member or group of members according to a reciprocating motion along another trajectory not parallel to the said first trajectory, the forces originating from the interaction of the magnetic fields of two permanent magnets or of two groups of permanent magnets which are fixed on said two members or groups of members, respectively, without any mechanical connection or contact between same two members or groups of members.
More in particular, the subject of the invention is a method for moving a first member bearing a first group of permanent magnets of the same polarity along a circular trajectory by moving, by a reciprocating motion, a second member, or a plurality of second members, bearing a second group of permanent magnets and having no mechanical connection to the first member, along a rectilinear trajectory which is transverse to said circular trajectory, said first member being a magnetorotor, connected to a drive shaft and bearing the permanent magnets fixed around its outer circumference, said first member moving according to a rotative motion around an axis which is perpendicular to the plane on which the permanent magnets of said second member are radially distributed, and passes through the geometrical center of said circumference, said second member, or plurality of second members, having the permanent magnets distributed around said geometrical center, facing the first group of permanent magnets and being mechanically connected to the piston(s), which may also be called pulsor(s), of an internal combustion engine, and energy restituting means that are compressed by the move-away motion of the pistons consequent to the gas combustion ans expansion reciprocating the motion during the return and compression phase of the engine, characterized by the characterizing portion of the appended claim 1.

The invention also concerns an apparatus for carrying out the above method, in accordance with appended claim 4.

Naturally the magnets, for a long lasting efficiency, must have been "stabilized", and their temperature must be kept by suitable means below a preset limit dependent on their constitution.

A method somehow similar is disclosed in Patent application EP-A-0 152 252, but disposition and motion of the various parts are different, and repulsive magnets are used, that causing the physical impossibility to achieve the same results offered by the present application, especially as far as the mechanical efficiency rate is concerned.

A further method is described also in patent US-A-3 992 132, wherein magnets are used for converting a rotative motion into a reciprocating motion but, given the way the parts are mounted, and the magnets are oriented (with alternated polarities), it results impossible to use the method for effecting the opposite conversion of a reciprocating motion into a rotative motion.

Referring to the accompanying drawings, they show:
- in fig. 1a, 1b, 1c, 1d a sequence of positions of two members fixed on two magnets, during the motion obtained by means of the method of the invention;
- in fig. 2 the method is applied to two groups of magnets, one of which is fixed on an external circumference of a rotating cylinder, made from a non-magnetic material;
- in fig. 3 the cross-section of an embodiment adapted to realize the method of the invention with connection to a pair of "reversed star" six cylinder engines;
- in fig. 4 a further embodiment with a one star engine and double cylinder;
- in fig. 5 a schematic drawing of a further possible embodiment, with one engine and a triple rotating cylinder;
- in fig. 6 a possible way of suitably laying and orienting the magnets which are fixed to the members forming the apparatus of the invention, coupled to a reversed star 6 cylinder engine;
- in fig. 7 a schematic drawing, concerning only one magnet, reciprocated by one piston, one magnet of the first rotating cylinder and one magnet of a second rotating cylinder integral to the first one;
- in fig. 8 a sketch explaning the balanced distribution of forces for simultaneous explosions in four cylinders;
- in fig. 9 the schematic top view of an apparatus coupled to a six cylinder engine with the cylinders axes inclined with respect to the outer surface of magnets 1ⁱ of the rotating cylinder (magnetorotor);
- in fig. 10 a section of the engine effected along a plane parallel to the sheet of the drawing and comprising the axis of a piston, or pulsor: to show the parts more clearly a scavenging-air compression cylinder has also been represented, although it is located below the plane;
- in fig. 11, the particular path suggested for the pressurized scavenging-air;
- in fig. 12 a detail representing the combustion and ignition area;
- in fig. 13 a prospective view of an engine with as many cylinders as magnets located along a circumference of the magnetorotor;
- in fig. 14 the engine interposed between two overlaid magnetorotors;
- in fig. 15 two engines mechanically connected "in series" by means of a motion-inverter;
- in fig. 16 the curve of the trajectories followed by the center of a magnet or of a ferromagnetic member moving integrally with a pulsor, with respect to the magnetorotor;
- in fig. 17 the side-view of a longitudinal section of the mechanical energy restituting system, with variable distance between springs and a fixed structure, according to one embodiment of the invention;
- in fig. 18 the trajectories, which may be achieved, with and without the above said energy restituting system, respectively.

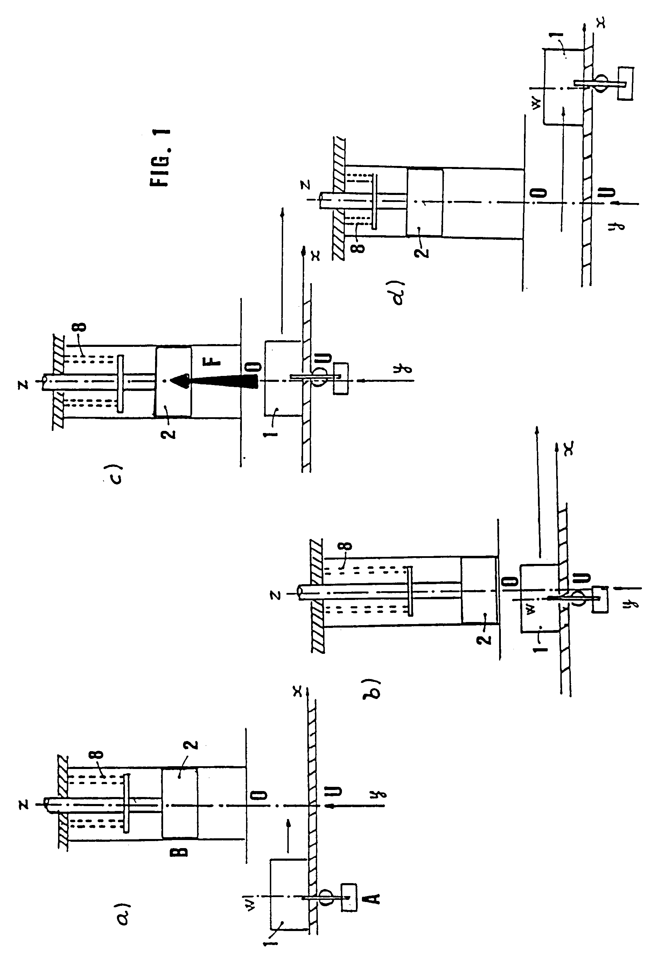

With reference to figures 1a, 1b, 1c, 1d: from physics it is known that magnetic fields are irrotational, i.e., in this case, that the energy supplied or "absorbed" by the magnetic field from two ferro-magnetic objects, of which at least one is magnetized, during any movement along a closed line inside said field is equal to zero. (Being that valid also if said line closes at the infinite).
Magnetized members 1 and 2, (which are allowed to move only along lines x and y respectively), because of their mutual attraction, will lose, during their simultaneous movements from A to U and from B to 0, an amount of potential energy exactly equal to the energy that an external force shall supply for example to member 2 in order to pull it back over the extreme border limit of the magnetic field.
In other words in fig. 1a, if magnets 1 and 2, which may only move along line x and y, respectively, are brought to a distance small enough for their mutual attraction to be initiated, they attract one another because of the related magnetical field, and are accelerated along line y and line x, respectively, acquiring kinetic energy and reaching the positions shown in fig. 1b; at this point, i.e. immediately before their magnetic axes w and z lay one over the other and their poles mesh, if the magnet 2 is suddenly pulled back vertically, by an external force F along line y, so that the poles are very quickly separated before the braking action, which magnet 2 would effect on magnet 1 occurs, if the latter would keep moving while they still were located at the position of poles-meshing, it will be achieved that magnet 1 and a member eventually fixed to it, will be able to keep on running along line x, with the kinetic energy that they had acquired up to that moment (fig. 1d).

Naturally the sequence described above may be repeated indefinitely, with other magnets 1ⁱ entering the field of magnetical attraction at the same time as a spring 8 or a similar energy restituting device returns magnet 2.

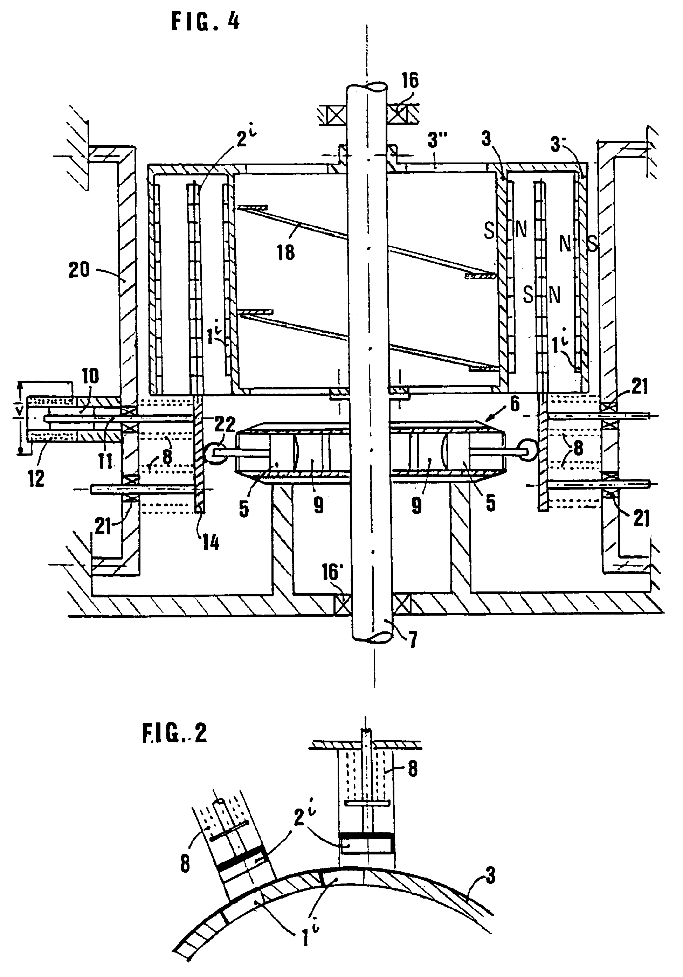

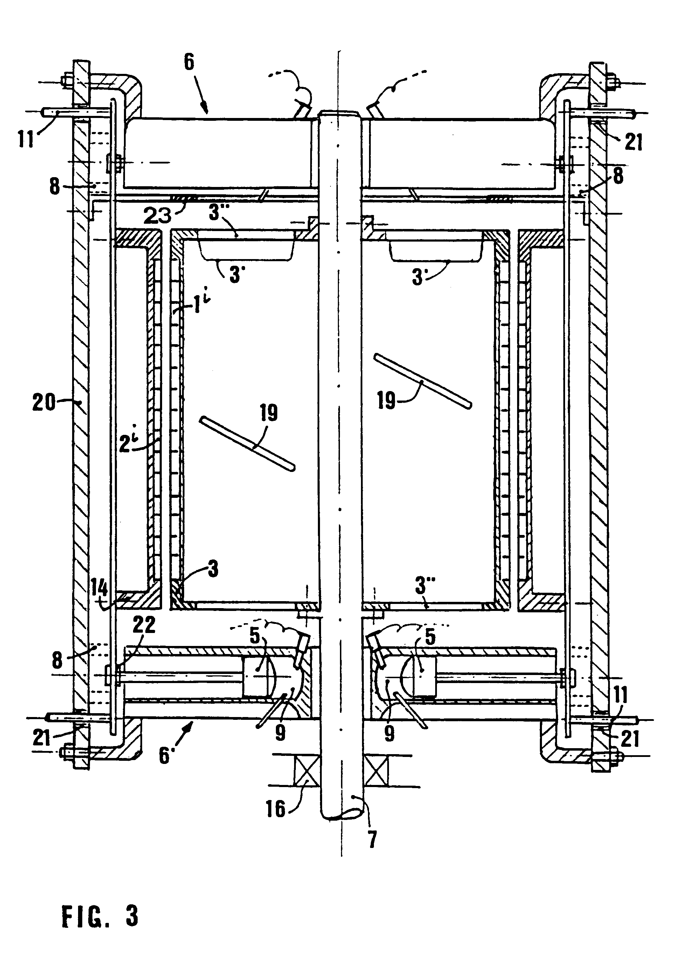

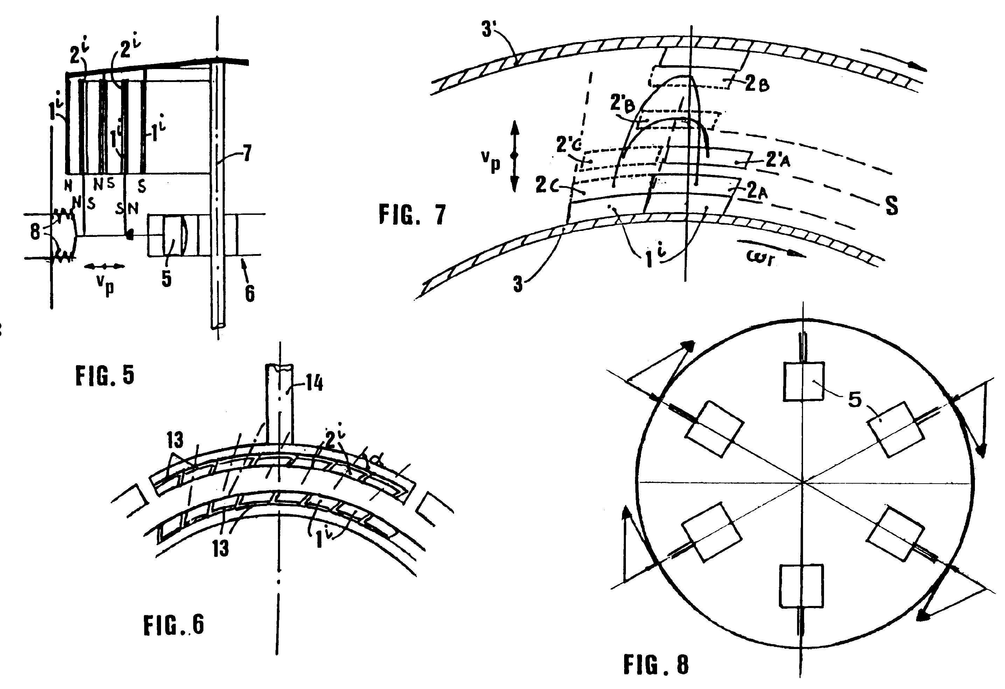

Then, if magnets 1ⁱ which are contiguous or equally interspaced, are fixed along the outer circumference of a cylinder 3 fig. 2 (obviously made from non-magnetic material), and a certain number of magnets 2ⁱ are positioned radially around said cylinder, all of them being provided with an energy restituting system 8, as previously disclosed, it will be possible by suitably timing the action of forces F upon each magnet 2, to move the magnetorotor, i.e. the rotating cylinder 3, with a rotative motion due to the pulling action on said cylinder operated by magnets 1ⁱ.
The concept is still totally valid if many groups of magnets 1ⁱ and 2ⁱ are stacked (one upon another) as shown in figures 3 and 4.

In order to exert forces F on magnets 2ⁱ, it is for example possible to mechanically connect them to the pistons of one or more than one "reversed star" internal combustion, preferably two-stroke engines 6, 6′, obtaining the result of transforming the energy supplied by the combustion into kinetic energy, actually mechanical energy of the magnetorotor 3, and of a drive shaft 7 rigidly connected thereto.

The energy supplied by each combustion exceeding the work drawn by magnetorotor 3 will be restituted to the piston by energy restituting devices, such as, for example, springs 8 and, as better explained later, it will cooperate to effect the compression inside the cylinder for the following cycle.

In order to reduce the volume of the device for a given power, it is useful to approach to one another the magnets located along each circumference and, for making that possible, without the action of each magnet negatively interfering with the action of another adjacent, it is useful to foresee a suitable aiming of the vector of magnetic field of the magnets, installing also flux baffles 13 made from metal sheet and shaped for example as shown in figure 6, on said magnets.

Figure 6 shows a possible example of such a way of positioning the magnets, which will be further described below, with the axis of the magnetic field inclined by a desired angle with respect to the faces of the magnets, eventually sidewise stepped by a suitable measure, slightly different for contiguous magnets, in order to correct the little scalar trajectory aberrations owing to the curvature of the parts. The magnetic flux baffles 13 have a wall parallel to this axis, the direction of which is substantially parallel to the trajectory of the relative motion of the magnets moved by reciprocating motion with respect to the magnetorotor magnets during the approach stroke.

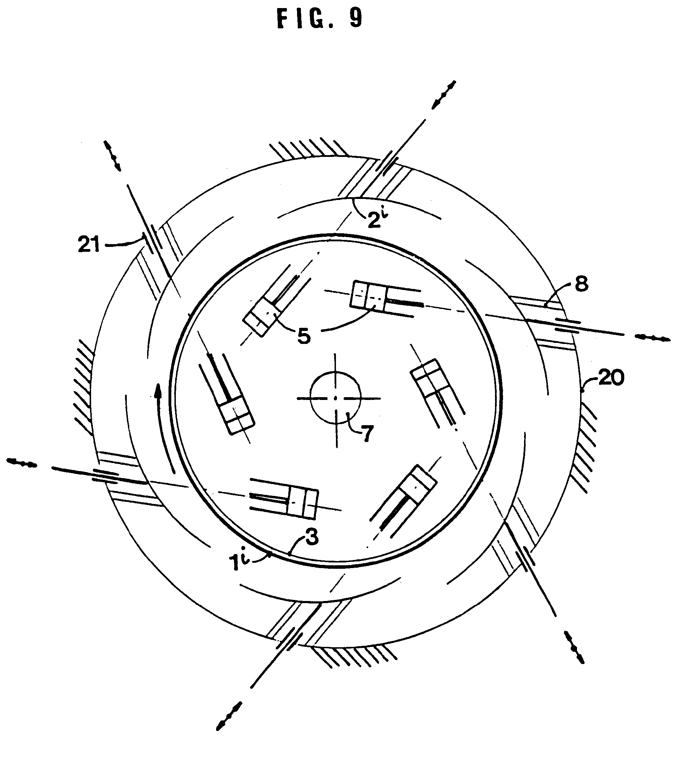

The axes of motion of pistons 5ⁱ, in a preferred embodiment, are substantially parallel to the axes of the magnetic fields of magnets 1ⁱ (fig. 9) or more generally not perpendicular to the outer face of the magnetorotor.

It is to be pointed out that said flux baffles 13, among other things, increase the induction linked to the single magnets in the area more effective for the working of the apparatuses adapt to effect the method subject of the invention, practically eliminating it in the remaining areas, therefore their use is often advisable. The same figure 6 shows a further improved embodiment of the apparatus: by means of suitable linking parts 14, many contiguous magnets are connected to one piston. For example, in the case of a 6 cylinder engine, their number is equal to 1/6 of the total number of the magnets installed along a single circumference of rotor 3.

Many rows (10 in figure 4), carrying the said number of magnets may be stacked upon one another. If 42 magnets are installed along a circumference of the rotor, for example, each piston is connected to 42/6 x 10 = 70 magnets, allowing the use of the energy supplied by the combustion inside the related cylinder.

The form, induction, number and dimensions of the magnets may be varied, and there are several possible ways of aiming the fields and positioning the magnets on the various parts; the most useful solutions will be described, case by case, by the test-work.

For constructing magnetorotors and more generally components which move within the various magnetic fields it is naturally necessary to choose non-magnetic materials, with good mechanical resistance.

Such an embodiment as a propeller coupled to one or to more than one internal combustion engines is advantageous also as far as the efficiency is concerned. In order to understand this, it will be useful to consider the energy balance of the apparatus, referring, for an easier comprehension, to only one pair of magnets 1, 2, as shown in figure 2.

It has to be firstly considered that, given the features of the apparatus, the amount of energy lost because of friction effect is extremely low.

As mentioned, the potential energy of the two magnets, during their mutual approach due to mutual attraction, becomes kinetic energy of both magnets, but however the kinetic energy of magnet 1 alone makes rotor 3 rotate.

The kinetic energy of magnet 2, though, if connected, as shown, to a piston of an internal combustion engine, is not wasted, as it becomes, during the pistons return stroke, compression work of the gas, as already mentioned, inside the cylinder before the next ignition, cooperating with the energy-restituting device 8.

The curve of the magnetic attraction force related to the distance is, however, similar to the curve of a "pseudoadiabatic" compression.
In order to achieve the maximum efficiency of the apparatus, a suitable way to go is to electronically relate, by means of well known methods and devices, the injection and ignition timing to the positions of magnets 2 (or also of the members fixed thereto) with respect to the rotating cylinder, to its rotation speed, to the amount of injected fuel, or to all these factors together, or to others depending on type and way of working of the used electronic control device.
By so doing, the result is obtained that move-away- and return-stroke of magnets 2ⁱ correspond to a predetermined rotation angle of magnetorotor 3 and that predetermined trajectories are followed in order to get the most proper work-cycle of the magnets.

For purposes better explained in the following parts of the description, the electronic control system might also take into account the motion of an operating device (also better explained later on) operated by a driver, device that "activates" a given number of pistons.

Further, and for similar reasons, it is useful to regulate the injected amount of fuel at the same time, relating it to the rotation speed of magnetorotor 3.

A stopping device, for example a stiff ring 23 (fig. 3) stops magnets 2ⁱ from touching magnets 1ⁱ if an accidental compression failure inside a cylinder occurs.

Considering the description to this point, it is clear that a propeller derived from the method which is the subject of the invention does not require a crank-shaft or linking rods. Hence, it will be possible,by means of the afore mentioned driver operated devices, connected to an electronic control box of known type, to cause both injection and ignition in some or all of the cylinders, depending on the power or torque to be supplied. If then it is preferable (subject to worsening the noise level) to fully eliminate the strains (already very small, given the low speed and the fractioning of the cylinder) radially acting on bearing 16, 16′ of drive shaft 7 connected to the magnetorotor, it is possible in one embodiment, to foresee that, for example in a six-cylinder star, engine, for five different positions of the driver operated device (i.e. a pedal), injection and ignition occur in none, two, three, four or 6 cylinders, geometrically positioned in such a way that the resulting force produced by the radial components acting on the pistons, and its resulting torque around the rotation axis are at any time equal to zero (fig. 8). The higher the number of pistons, the "smoother" the apparatus will work. As already mentioned, the axis of pistons 5ⁱ are not necessarily perpendicular to the surface of the magnetorotor 3. A possible solution foresees axes inclined with respect to the outer surfaces of magnets 1ⁱ (fig. 9) fixed on magnetorotor 3. For normal appliances, such as car-engines, it may be advisable to interconnect all the pistons, mechanically and/or connecting the various combustion chambers so as to get an exact and easier synchronization among them, notwithstanding the slight differences of, for example, the mechanical loss due to friction effect related to the various pistons. In such case, all the pistons would work the same way and contemporarily.
By carefully dimensioning (for example by means of drive ball bushings 21) the driving with the lowest possible friction of magnets 2ⁱ, or more properly of the parts (11) supporting them, and their linking system 22 to pistons 5 (for example a sphere-point 22′ in figure 4), it is easy to reach the result that the forces effected on said pistons by the group of magnets 2ⁱ linked to them do not have any component cutting the axes of the cylinders, as they are purely axial, and this considerably limites friction and over-heating on the cylinder walls (due in this case only to the pressure of the compression pressure seal-rings), significantly or totally reducing the need of lubricating said cylinders, the need for oil-whipping etc, with evident economical and enviromental advantages. To start the apparatus, given its features, it is sufficient to let the magnetorotor rotate a small angle up to the meshing of reference points, for example installed on the rotor and on a non-rotating part, respectively, which the electronic control-box uses to perform its functions. After the first combustion, the apparatus will run automatically. The said reference points are not shown in the figures. For the starting operation it is possible to use well known means, such as a "gear-box" type lever with reduction gear, or a belt and free-wheel device, connected to the rotor or other similar solutions, not shown in the figures. In the stand-by situation (with the vehicle not in motion or even just with the aforementioned pedal at a position 0 in the case of motor vehicles), the propeller is inactive and no combustion occurrs.

In order to generate the charge-current for the batteries of the vehicle carrying the device according to the invention, it is sufficient to fix one or more magnets 10 to one or more members moved by reciprocating motion (one of these members shown in fig. 4 is a shaft 11 mounted on supporting member 14 also called cursor, of magnets 2ⁱ) and to mount one or more members 12 on one or many parts of the fixed structure 20, said parts being able to transform the energy produced by the reciprocated mutual approaching and separating motion of said magnets 10 into electric current. Said members may be simple induction-coils, on whose end-contacts an alternate voltage will be drawn, a voltage that, when rectified by means of known methods, can generate the charge-current of said battery or batteries.

It is also possible with the low values of magnetic induction linked to each single magnet, since its variation is very quick, and therefore relevant to the voltage$\text{e = -} \frac{\text{dø}}{\text{d+}}$ at the end contacts of mentioned coils.

A preferred embodiment shows the use of relatively large diameter pistons (pulsors) with a limited compression strokes which are shorter than the distance between two facing magnets when on the border-line of the sensible attraction field.

The disclosed propeller is applicable in many cases; e.g.: for propulsion purposes on cars, agriculture, transportation and industrial vehicles, coupled to the rotor of helicopters and, more generally, as propeller for a rotating shaft, for example the shaft of a motor-operated current generators.

There are considerable advantages offered by the method of the invention and by the propeller derived therefrom for example in the field of motor-vehicles, they eliminate the need for many costly devices traditionally coupled to an internal combustion engine, such as:
crank-shaft with related supports and bushings;
linking-rods with related supports, pins, bushing etc.;
- fly-wheel: :the magnetorotor, suitably dimensioned, is a fly-wheel "per se";
- gear-box: :since at any rotation speed the torque can be varied by activating or deactivating a determined number of pistons, or by regulating the energy per cycle, and /or by varying the distance between springs 8 and cursors 14, it may be sufficient to have a simple gear box for forwards and backwards motion, or a gear box with fewer gears than traditional gear-boxes;
- the starting-motor:: the starting operation can be done manually as described;

the alternate or direct current generator for charging the bactery;
the torque converter for the heavy duty vehicles;
the device, recently developed and realized, for automatically switching off the engine when the vehicle is not in motion;
the lubricating system for the pistons and for the engine as a whole;
the cooling-system: with star engines, given the low temperatures and the dimensions of the heat-exchanging surface, and given the empty space inside the magnetorotor, a helicoidal profile 18 fig. 4 mounted therein, or fins 19 fig. 3 similarly located can convey sufficient air throughout holes 3˝ formed on the "lids" of the rotating cylinder 3 for a sufficient cooling-down. Also said lids, if suitably shaped, can work as cooling ventilator 3′ fig. 3.

The resulting specific fuel consumption is very low, as will be explained later.
The total weight of the propeller and of all the essential parts is considerably reduced, with all the attained advantages and especially during city-use, owing to the high value of the air/fuel ratio and the relatively low adoptable working temperatures, pollution can be reduced to almost to zero.

All that allows to save on number of parts used and on the assembly time in such a measure, that could considerably reduce the costs of a motor-vehicle, or make it possible, with costs equal to the actual ones, to give more space to optimal solutions which nowadays have not been adopted owing to their costs, such as the use of hydrogen as fuel which is very suitable for the device herein, and in the inventor's opinion, would represent a unique positive improvement in the fight against pollution which tries to solve the problems, by now very heavy, deriving therefrom, contemporarily improving the situation of many areas now suffering long periods of drought: as it is known, the result of the combustion of hydrogen is water vapour (since it is not necessary to consider NOₓ′s thanks to the device according to the invention).

At the same time, with said device it is possible to maintain behaviour and acoustics, psychologically important, of the internal combustion engine.

Basically nothing changes if, because of costs and needed power, only one internal combustion engine, (figs. 4 and 5) mounted above or below magnetorotor 3 is used, instead of two, and if, instead of a simple magnetorotor, a double one 3, 3′ fig. 4 or more generally a multiple one is used, carrying magnets with the poles oriented as shown in fig. 4, in order to achieve a sort of "double effect", with higher power, or if, moreover, the number of coaxial rotating cylinders is greater than two, and more than one system of magnets operated by pistons 5 are present.

In dimensioning the magnetorotors it will have to be taken into account that, for two integral coaxial rotors, with peripheral speed equal to ωr₁ and ωr₂, respectively, the distance between two adjacent magnets shall respect the relation:$\text{p₁ : p₂ = r₁ : r₂}$
wherein:
- p₁: = distance of magnets on rotor 1.
- p₂: = distance of magnets on rotor 2.

- r₁: = rotor 1 radius.
- r₂: = rotor 2 radius.

However, it is not strictly necessary, if not considering the power at stake, that members 1ⁱ and 2ⁱ are both magnetized: one of them, preferably 2ⁱ, may be simply made from a ferromagnetic metal, therewith further reducing the propeller's cost.

As already mentioned, the magnets can be suitably oriented, with or without flux baffles 13 mounted on them (see fig. 6), and can be variously spaced, or quite contiguous.

A further advantage to point out is the very unlikely probability of failures due to breakages: there are few parts that come in contact and, moreover, an incorrect timing will only reduce the engine's efficiency, even down to zero, but without further risks.

It is interesting to consider the energy "blocks" balance involved in the working of the apparatuses according to the invention.

By naming:
- Eₛ: the total energy to be provided to the system;
- E: energy generated by one combustion;
- E_{c}: energy for the compression inside the cylinder;
- L_{M}: total energy needed for separating magnets 2ⁱ from magnets 1ⁱ ;
- L_{M2}: total energy needed for opposing magnets 2ⁱ against the repulsive magnets fixed on the second magnetorotor 3;
- L_{K}: compression work effected by mechanical energy restituting system 8;
- L_{y}: energy supplied along axis y, and therefore to pistons 5, by magnets 2ⁱ during their approaching return-stroke toward magnets 1ᵢ ;
- Lₓ: energy drawn along axis x, i.e. according to the magnetorotor's rotation;

and considering that, because of previously mentioned energy reasons, the total potential energy lost by magnets 1ⁱ and 2ⁱ , L_{M} is equal to Lₓ + L_{y} it is possible to write:${\text{E}}_{\text{s}} {\text{= L}}_{\text{M}} {\text{+ L}}_{\text{K}}$${\text{E}}_{\text{c}} {\text{= L}}_{\text{K}} {\text{+ L}}_{\text{y}}$
and, subtracting member by member:${\text{E = E}}_{\text{s}} {\text{- E}}_{\text{c}} {\text{= L}}_{\text{M}} {\text{- L}}_{\text{y}}$
i.e. substituting${\text{E = E}}_{\text{s}} {\text{- E}}_{\text{c}} {\text{= L}}_{\text{x}}$

In other words, considering the compression work as recovered energy, it is obtained that, excluding losses due to friction (very low) for example of members 11 on bushings 21 (fig. 4), the consumed energy E is exactly equal to the energy drawn on magnetorotor (excluding the thermodynamic efficiency).

In the case of double or multiple magnetorotors, if the magnets mounted on second rotor 3′ exist, it will be necessary to supply the energy L_{M2} for opposing them against magnets 2ⁱ, thus increasing the power, but reducing efficiency and lifetime of the magnets. The opportunity of using repelling magnets, therefore, has to be carefully examined case by case.

With multiple magnetorotors, but only with attractive magnets, the energetic arguments however remain valid, and higher powers and compressions will be achieved.

As both the method according to the invention and the propeller adapted to realize it are completely new, it is obvious that a wide range of modifications and improvements are possible, so as to achieve the best results for the different appliances; the embodiments shown in the accompanying drawings and mentioned in the description concern therefore only preferred examples, and are not binding or not limiting with respect to the subject matter of claims 1 and 4 and of the dependent claims thereto.

It is easy to understand that the adjustments of the device, in the case, for example, of constant power and rotation speed, such as when it is coupled to a generator, are very simple.

In that specific case, though, for discontinuous functioning, it will be necessary to start the device by means of an automatic starting device of known type, which will have to let magnetorotor 3 rotate by only a small initial rotation angle, without having to effect any compression cycle.

The internal combustion engine most easily adaptable to be coupled to one or many magnetorotors will now receive a more detailed description.

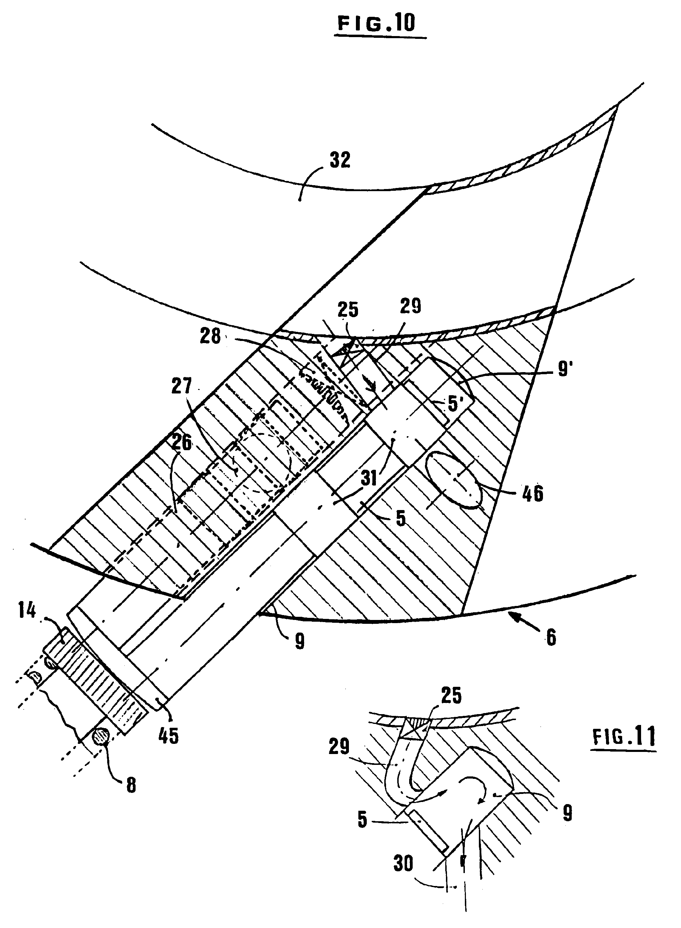

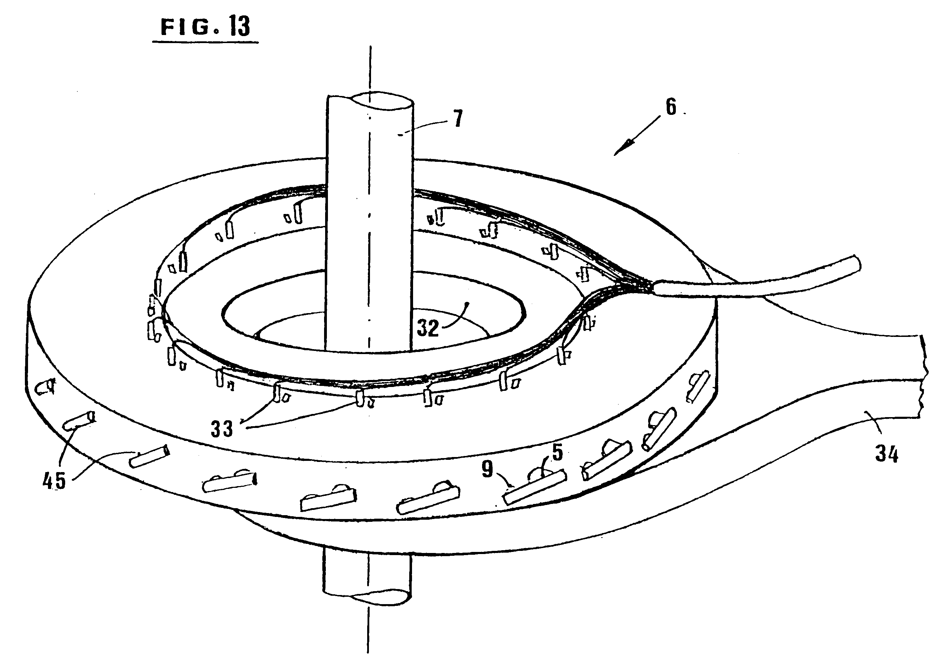

With reference to figs 10 and 13, the fuel is immitted into the combustion chambers 9′ of a selected number of cylinders 9 by means of preferably direct electronic injection, according to the torque or the power needed at each moment.

The timing of such injections, its regulation and the ignition time, when not in presence of a Diesel self-igniting cycle, are all controlled, as said, by an electronic control system of known type, named a control-box and which is programmed in such a way so as to continuously measure various parameters such as rotation speed of magnetorotor 3 (as well as of shaft 7 fixed thereto), its angular acceleration and the will of the driver, will which can be understood from the type of operation: speeding-up or slowing down, which he wanted to effect by moving, for example, the accelerator pedal, the brake pedal or other driving members.

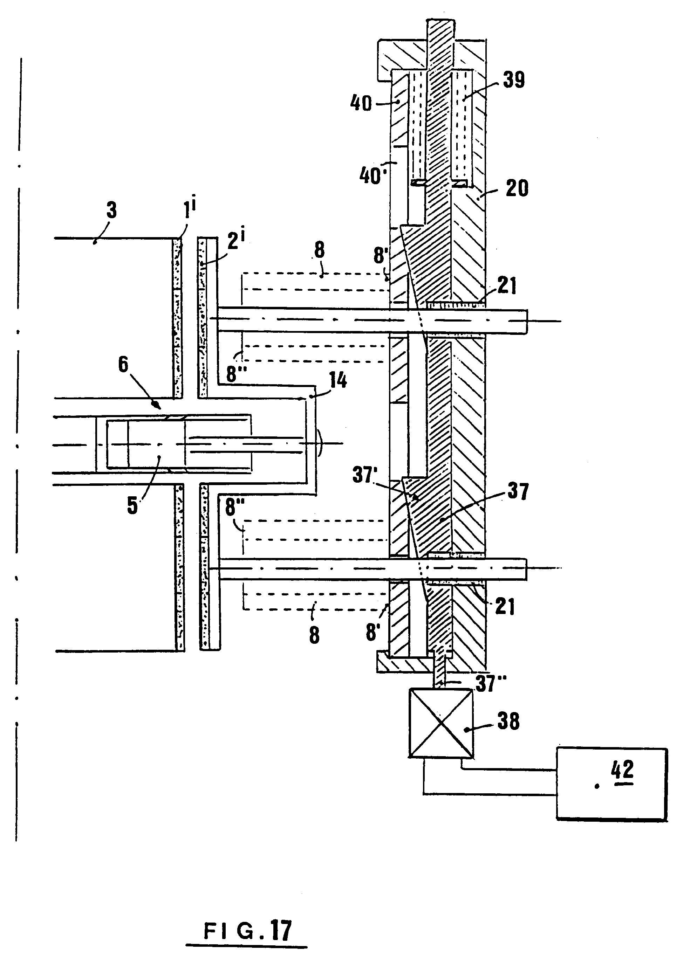

Such a control-box 42, given its indefinite nature, has been schematically represented only in figure 17.

In order to perform its functions it can be based, for example, on the measurements of the relative positions occupied by reference members located on magnetorotor 3, or on shaft 7, and on a whichever not-rotating part.

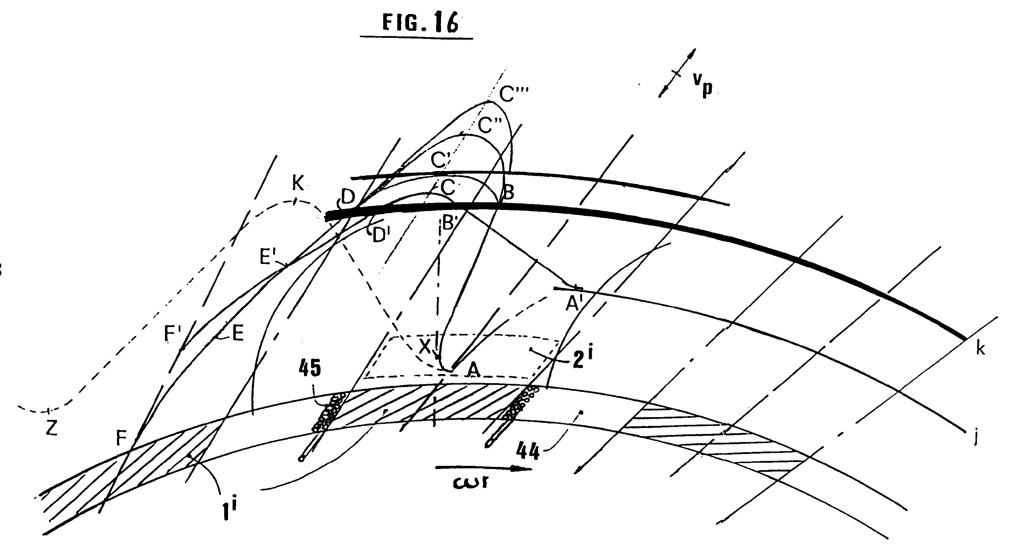

The caloric energy coming from the fuel in a combustion, together with the compression energy of the work effected, along the approaching trajectory between magnets 1ⁱ and 2ⁱ, both by the magnetic field and by the kinetic energy of pulsor 5 as well as of the members integral thereto due to the action of restituting system 8, suddenly separate magnets 1ⁱ and 2ⁱ, letting them follow one of the relative motion trajectories shown in figure 16, having a required inclination depending on the ratio between the speed of pulsor 5 along its axis and the peripheral speed of magnets 1ⁱ of the magnetorotor, and also depending on the inclination of the axis of pulsors with respect to the surface of magnetorotor 3.

The work to be effected for quickly separating said magnets is equal to the total potential energy of the magnetic field, but a part of it will be restituted by the magnetic field in the form of compression work in the next cycle.

That means that, if the fuel combustion supplies pulsor 5 with an amount of energy in predetermined measure higher than the difference between said total potential energy and said restituted compression work, the same pulsor will gain a certain amount of residual kinetic energy, effecting a longer compression stroke in the following cycle. On the contrary, supplying said pulsor 5 with an amount of energy exactly equal to the above difference, the same pulsor will move with the same velocities as in the previous cycle, velocities mostly caused by the expansion of the compressed gas (at different compression ratios depending on the rotation speed of magnetorotor 3).

In other words, the combustion energy adds itself to the gas expansion's energy, in order to supply the system with the energy which is drawn at each cycle by the magnetorotor 3.
In fact, knowing the mass of all the members integral to the pulsor during its motion, (i.e.) magnets 2ⁱ fixed thereon plus members 14 supporting and connecting them to pulsor 5), and the mass of same pulsor, it is easy to determine how much caloric energy is needed in order that the pulsor, after the combustion, and after having separated magnets 1ⁱ and 2ⁱ, keeps a required velocity vₚ along the direction of its axis. Referring to figure 16: given the rotation speed of magnetorotor 3 as well as its peripheral velocity ωr, the amount of calorific energy (i.e. the fuel amount) is regulated so as to generate the required ratio between said peripheral speed ωr and vₚ, in such a way as to originate relative motion trajectories, during separating and approaching strokes of magnets 2ⁱ with respect to magnets 1ⁱ, with the most suitable inclination for properly dividing in a required way the magnetic field energy between drawn mechanical work and compression work in the cylinders and/or for obtaining mechanical work according to a rotation sense or to the opposite one.

In the present description both members 1ⁱ and 2ⁱ are for conciseness named "magnets", but in reality, when the required power is not high, members 2ⁱ are preferably simple ferromagnetic members, eventually made from thin insulated metal sheets with the axis substantially parallel to the trajectory along which member 2ⁱ run while the linked flux variation reachs its maximum value.
That allows smaller variations of the magnetic quantities B and H linked to magnets 1ⁱ during their relative movement with respect to members 2ⁱ, assuring a longer efficiency of magnets 1ⁱ even without a cooling action. As a result the magnetorotor's cost, is considerably reduced.

The eventual small loss of permanent induction flux of the magnets which should occur after a certain period of use can however be recovered, at the end of said period, letting a direct current flow through coils permanently fixed around magnets 1ⁱ and, for example, immersed within a resinous supporting layer; such coils are normally open while the motor works, in order not to create inducted magnetic fields, which are disadvantageous for the dynamic and energetic balance of the engine.

The cursor supporting magnet 2ⁱ, moving integrally to pulsor 5 even only by effect of mechanical contact, during the outward stroke, meets the restituting system 8 at point B and then, because of losing its kinetic energy at point C, runs back in the opposite direction and (not taking into account energy losses due to friction, which are however very small) with the same kinetic energy, i.e., the masses being constant, with the same (as absolute value) velocity -Vₚ, in the direction represented in figure 16.

It will thus run an almost rectilinear stroke DE, being contemporarily attracted with increasing intensity by the following magnet 1ⁱ, and the pulsor integral to the said magnet will begin the compression for the next cycle.

Due to the simultaneous actions of the residual kinetic energy, of the magnetic field of 1ⁱ and of the resistance to the compression effected by the gas contained inside the cylinder, it will follow the trajectory portion EF, while the required amount of fuel is injected, suitably timed and regulated, into combustion chamber 9′ of cylinder 9, fuel which will be, again with suitable timing, ignited.

Such ignition, in addition to the effect of the expansion of the compressed gas, will cause a quick pressure-increase inside the cylinder when the pulsor finds itself at point A, pulsor which will be pushed back, as already said, at a predetermined velocity vₚ.

For different rotation speeds of the cylinder, it will be possible to choose suitable values of vₚ so as to obtain the most advantageous trajectories under the aspect of mechanical and energetic efficiency.

The portions of trajectory due to the suction and scavenge-phase have not been shown in detail, obviously they are portions with a constant value of vₚ.

In the case of high powers and rotation speeds, the amount of kinetic energy to be used is big, and consequently high compression ratios, around 40 : 1 and over, are reached, in order not to excessively increase the area of pulsors 5, (which can be however more than one for each magnet, stacked upon one another), it is advisable to use diesel fuel or similar suitable essences as fuel.

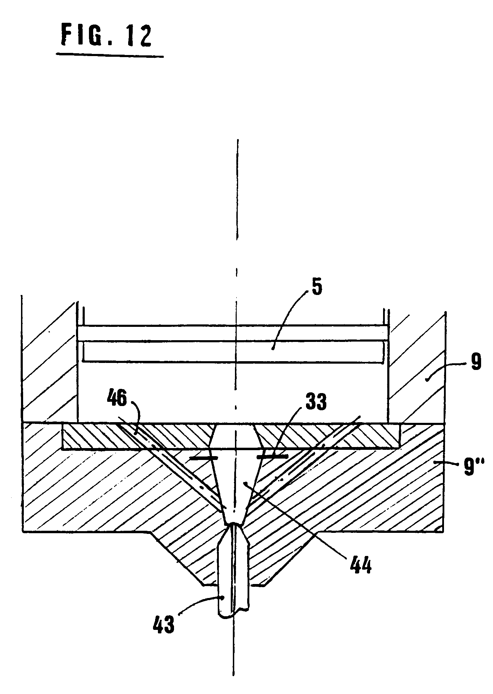

In case of lower compression rates any kind of fuel can be used, provided that electrodes 33 (figure 12) are inserted, for the fuel timed ignition.
The theoretical explanation of the results of a low specific fuel consumption offered by an engine operating according to the invention can be deduced from the formula of the ideal thermodynamic, efficiency rate η id of the Diesel cycle taken as reference-cycle, wherein:$\text{(K) η id = 1 -} \frac{\text{1}}{\text{ρx-1}} \frac{{\text{τ}}^{\text{IX}} \text{- 1}}{{\text{(τ}}^{\text{I}} \text{- 1)x}}$
(In reality with the present engine any kind of cycle can theoretically be obtained for the same kind of fuel.) wherein:
- τ^{I} the ratio between final and initial temperatures of the combustion during the phase at constant pressure;
- X is the ratio between the specific heats which can orientatively be assumed as equal to 1,40;
- ρ is the compression ratio, which varies in the concerned engine.

As already explained in the description, ρ varies depending on the supplied power, i.e. on the return-stroke length of the pulsors, and again according to such stroke the amount of fuel to be burnt in a cycle is different, said amount being proportional to the total work to make in order to separate magnets 2ⁱ from magnets 1ⁱ ;

The amount of air in the cylinder, which as matter of fact results much higher than the minimum stoichimetric value, is, on the contrary, constant. As a result the temperature increase in a cycle due to the combustion also varies according to the drawn power, and similar is the behaviour of the temperature-increase due to the compression of the gases inside the cylinder.

Assuming that the air is sucked in at a temperature of 27°C, in a theoretical case, for example, at the maximum power, the gas temperature at the end of the compression (ρ = 9) is about 433°C, the Δ t (temperature increase) due to the combustion is (only) 120°C and the final temperature is 553°C; accordingly:
at maximum power :${\text{ρ = 9; τ}}^{\text{I}} {\text{= 1,17; τ}}^{\text{IX}} \text{= 1,24}$

Substituting said measures in (K), the efficiency ratios are as follows:
at maximum power$\text{η id = 0,58}$

As it can be clearly seen, with a compression rate ρ = 9 it is possible to achieve thermodynamic efficiencies higher then the maximum efficiency of a traditional Diesel engine at the best conditions, with some ρ.

Furthermore considering that, with the relatively low cited temperatures, the external thermal losses are easily reduced and the dissociation of H₂O and CO₂ is extremely limited, if not quite zero, the thermal + thermodynamic efficiency of the engine concerned is easily comparable with the same efficiency of the traditional internal combustion engines.

It has to be further added that the mechanical + organic efficiency of the engine, from the cylinder up to the gear-box, in the related example can be assumed as ranging around 0,90 ÷ 0,92, whilst the same efficiency for a traditional fixed-geometry engine with crank-shaft, normally is not too far from 0,60.

At this point of the explanations it is useful to describe an example of approximate planning of an engine according to the invention, working accordingly to the related method.

First of all the inclination of the pulsors with respect to the magnetorotor's magnets are prefixed. (For example 45°).

Due to this inclination, about 68 % of the total work L_{M} of magnetic fields gives mechanical work, the remaining about 32 % gives compression work L_{c}.

When separating the magnets, while they are running stroke AB of figure 16, an extra-amount of mechanical work Δ E is drawn, approximately equal to the 30 % of the total magnetic fields work. It is therefore possible, for the approximate planning, to consider the total mechanical power as substantially equal to the total fields work L_{M} per second.

Said work is expressed as follows:${\text{L}}_{\text{M}} \text{=} \frac{\text{1}}{\text{Z}} {\text{F}}_{\text{pn}} \text{·Δ1 · q² ·p· n}$
(Z is a numeric coefficient which may be assumed as ≅ 7)
Wherein:
- Fₚₙ is the total attraction force exerted by the magnets connected to a pulsor, approximately equal to the 80 % of the theoretical force between the magnets at zero-distance since in the reality, between the magnets even when as close as possible to eachother, a space of few tenths of millimeter is always to be left;
- Δ1 is the maximum distance where the attraction force between the magnets is "sensible", assuming such force, for example, equal to$\frac{\text{1}}{\text{200}}$ of the above described maximum force;
- q is the number of magnets located on a magnetorotor's circumference;
- p is the number of said circumferences vertically laid one over another;
- n is the maximum rotation speed of magnetorotor, measured in revolutions per second.

Once fixed the mechanical power to be extracted, in order to dimension the motor cylinders, a stroke of the pulsors is prefixed, which causes the magnets to move away from one another substantially up to the above cited border distance of sensible attraction; for example:$\text{stroke = C = 0,95·Δ1 · 1,4}$
(coefficient 1,4 is due to the mentioned pulsors inclination and is$\text{≅} \frac{\text{1}}{\text{sinα}}$ )

Then, the force, which acts on the pulsors in order to separate the magnets with an acceleration sufficient to let them follow the trajectory shown in figure 16 is evaluated. Practically so as not to have braking forces, the move-away line must be at least perpendicular to the magnetorotor already at point x, and that is obtainable by means of a pulsor-velocity vₚ approximately equal to 1,5 times the peripheral velocity of the magnetorotor after a very short time, which can for instance be assumed as equal to the time of a tangential relative movement of$\frac{\text{1}}{\text{6}}$ ÷$\frac{\text{1}}{\text{10}}$ of their width 1.
Such time t is for example:$\text{t =} \frac{\text{1}}{\text{8}} \frac{\text{ℓ}}{\text{ωr}} \text{;}$
the required force, not considering minor differences, is expressed as follows:$\text{F =} \frac{\text{m} {\text{}}^{{\text{V}}_{\text{p}}}}{\text{t}}$
wherein m is the mass of the pulsors plus the mass of everything integral thereto (pivots 11, cursors 14, magnets 2ⁱ etc.)

Given this force, the "outward" force SΔp, which the compressed gas, even without the help of the combustion, has to exert on the pulsor at the point A of maximum approach between the magnets can be deduced (S = pulsor area and Δ p = pressure increase inside cylinder).

By effecting the calculations, it will be seen how the volumes of the cylinders are much bigger than the volumes corresponding to the stoichiometric ratio.

Owing to simple geometric reasons, such force$\text{SΔp is : SΔp = F +} \frac{{\text{F}}_{\text{p}} \text{m}}{\text{0,7}} \text{· p}$
(resulting over-evaluated, since, because of the inclinations, Fₚ has not its full theoretical value).

After having evaluated the piston (pulsor) dimensions and the pressure inside the cylinder, it is easy to evaluate the adiabatic expansion's work Lₑ along stroke AB:${\text{L}}_{\text{e}} \text{=} \frac{\text{1}}{\text{k}} \text{(0,95.1,4,.Δℓ) SΔp}$
(k is to be assumed dependent on ρ, constant pressure / or volume specific heat cp , cv etc.)
When injecting the fuel, an amount thereof is injected to produce, with the combustion inside the cylinder, an amount of energy equal to the magnetic mechanical work for that single cycle, i.e. equal to the total magnetic energy per cycle minus the magnetic compression work L_{c} which pulsor-magnets will effect in the following cycle, plus the cited extra-amount of mechanical work ΔEₘ.
Substantially, the energy supplied by the fuel, as said, is equal to the total magnetic work in the cycle (ignoring the efficiency ratios).
During the stroke AB the pulsors will be pushed by the gases expansion-work Lₑ, minus the magnetic compression work, and they will have, at point B, a residual kinetic energy Eᵥ${\text{E}}_{\text{v}} {\text{= L}}_{\text{e}} {\text{- L}}_{\text{c}}$

Having evaluated this energy value, and given the mass m of pulsor, cursor etc., the final pulsor velocity in B is easily calculable, that is its velocity at the beginning of the compression of the resilient members of the mechanical energy restituting system.
Provided the kinematic questions concerning the relationship between pulsor velocity and corresponding magnetorotor velocity have been correctly evaluated the times of pulsor strokes AB and EF are easily calculated.

By subtracting these times from the total time spent by a magnet 1ⁱ for moving itself by one position, the time is obtained, within which compression plus expansion of said restituting system has to take place. Since the kinetic energy Eᵥ absorbed and then restituted by the said system is known, the particulars of same system are easy to be determined; in the case of springs, for example, their maximum set, their rigidity and so on.

The above explanation can be adapted to each one of the different conditions of magnetorotor-speed, drawn power, compression etc., suitably acting on the timing of injection, ignition and combustion end of the fuel, advancing or retarding them so as to obtain the most proper trajectories according to methods that are well known by people skilled in the field of internal combustion engines.
Once dimensioned the engine as above explained, ρ, τ^{I}, τ^{IX} and ηid will consequently reach the values already mentioned in this description, i.e. ηid, in particular, will range between 0,50 and 0,75 under the normal use conditions. The final efficiency rate will range between 0,46 and 0,52 with the engine power going from 30 to 1000 Hp.

From what has been said it is understandable that the engine subject of the invention, shows a specific fuel-consumption much lower than the traditional engines, with much lower pollution. The details of ignition and combustion of the fuel shall be determined, case by case, by technicians skilled in the engines field, taking into account the new situations of compression and temperatures, (which vary depending on the power used), in order to achieve the best work-cycle for each use-condition.

By combining the data supplied by the experience in the field of after-burners, as well as in the field of multifuel engines (Hesselman eng.), it will be possible to obtain the best solution for each single case.

A successful solution is suggested by fig. 12: the fuel is ejected by injectors 43 directly toward electrodes 33 (as in multifuel engines), which the fuel reaches after mixing with a prefixed mass of air.
Such air (conceptually corresponding to the primary air of the after-burning technology) will be formed from the air contained inside the pre-chamber 44 in addition to the air "sucked" by the fuel-jet through one or more than one air-ducts (46) because of Venturi effect.

The fuel, burning while crossing the electrodes area, transmits, as gradually as required, the effects of its pressure increase to the remaining gas (actually air) contained inside cylinder 9 during the first stage AX of pulsor 5 "move-away" stroke.
It should be noted that above mentioned prechamber 44 is substantially "self-regulating": inside said prechamber at a certain compression ratio, a given mass of air is lodged, which combines itself with the amount of fuel needed for separating the magnets which are at the distance corresponding to said compression stage: by increasing the compression, at the same time the amount of fuel needed for separating the magnets and the air mass is increased, since they were closer than in the previous situation. The mass of air increases according to the compression curve, the amount of fuel increases according to the attraction-force curve depending on the distance between the magnets.

With the commonly used range of compression ratios 6 ≦ ρ ≦ 14, the latter curve has a trend fairly similar to the adiabatic curve trend, and the relatively small differences of the various distance between the magnets can be corrected by regulating the strength of the compound generated in prechamber 44, modifying (very slightly) the amount of fuel, or the number of air-ducts (46), or the injection-pressure, or the prechamber volume, or all these factors together. Many pairs of electrodes can be installed along the longitudinal axis of the prechamber, so as to make it possible to start the ignition when the fuel is mixed with the required amount of air. (This case is not represented in the drawings).

In the case of very high power, i.e. of relatively high rotation speeds of the magnetorotor, with consequently high amounts of kinetic energy to be exploited during the return-stroke of pulsors 5, a part of such energy can be transformed into further air-compression work, that can be used to effect air expansion inside one or many stages of a turbine splined to the drive shaft 7.
Such a solution, which is especially suitable for naval and aeronautical appliances, has not been represented in the drawings, as it is easily imaginable by a person skilled in the engines-field.
As the engine is a two-stroke engine, it is necessary to scavenge the exhaust gas, sending it to the discharge duct 46 while pulsor 5 moves away from combustion-chamber 9′. That is effectable by means of a substantially transverse pressurized air-jet, as shown in figure 10. Such a jet can be formed in various ways, with or without a pressurized air resevoir 32 acting as plenum chamber, by means of a compressor, with rotating members which is connected to the drive-shaft, or operated by electrical energy supplied for example by the batteries of the vehicle in which the engine is installed.

There is also the possibility (figure 10) to effect the compression by means of a plurality of pistons 26, preferably parallel to the engine-cylinders 9, of which one or more are connected by a coupling 45 to a pulsor 5, integral in motion to said pistons 26.

Each one of these pistons 26, after sucking air through the port 27, compresses it during the return-stroke up to the setting-pressure of a valve 28, through which the gas, at a prefixed pressure, is let into the plenum chamber 32 and subsequently passes, through the non-return valve 25 and duct 29, to the related cylinder 9.

The latter valve 25 is not essential for the cycle inside cylinder 9. Nevertheless said valve can sometimes be useful for avoiding an inadequate scavenge-air consumption by closing it in case, e.g., the total outward stroke of the pulsor is considerably higher than the expansion-stroke. Such a case will be described later. The shape of the section, its area and the useful stroke of such pistons 26 may be varied accordingly to the required pressurized-air flow-rate. The aforementioned compression can be effected during the return-stroke of pulsor 2, as represented in figure 10, or during their outward stroke (case not represented in the drawings).

Said system is especially suitable for the embodiment preferred by the inventor for not too high powers, wherein there are as many cylinders as magnets fixed along an outer circumference of magnetorotor 3.

As the pistons can be replaced with simple, preferrably hollow shafts carrying pressure-seal rings 31, the cost of the parts is so low, that the use of the said volumetric compressing pistons is advantageous, provided that their use would not cause unacceptable variations of the trajectory of magnets 2ⁱ.
Otherwise an alternative independent air-compressing system may be used, both electric or eventually mechanically connected to drive-shaft 7 or to a secondary shaft derived therefrom.

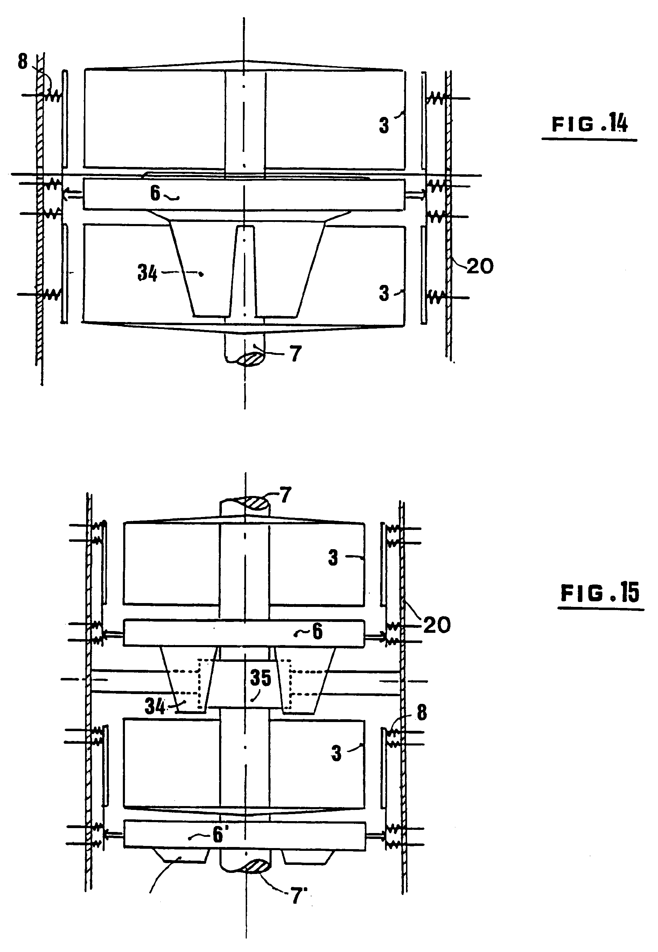

The aspect of the engine is shown in fig. 13.
Given the high reaction-torque transmitted to the supporting frame, (the maximum rotation speed for usual appliances, is not higher than 6-10 revolutions per second), it is useful to split the required power in two by means of two counter-rotating engines which are mechanically in parallel or, by means of a known rotation reversing device, 35 fig. 15, in series.
In order to reduce the strains on members 14 (cursors) which support magnets 2ⁱ, and thus their mass and the related inertial force, the inventor foresees to insert each engine between two half magnetorotors (fig. 14). Such a solution also helps bushings 21 fig. 4 through which the supporting shafts 14 of the cursor run, especially in the cases of single magnetorotor, as shown in the mentioned fig. 14.
For cooling down, in the cases of higher powers, it is possible to leave space between the two casings containing two adjacent cylinders. By doing so, the equivalent exchange-area results multiplied by more than three times.

Naturally, cooling fins mounted on said cylinder-casings will further improve the heat exchange. In other cases, suitably oriented air streams may be used, and they may be generated by the vehicle motion or by cooling fans. In the case of very high power, if the air-cooling system were inadequate, it would be easy to cool the engine down by means of an heat transferring fluid circulating inside annular or otherwise shaped jackets to be mounted around the cylinder-casings. Such solution has not been represented in the drawings.

In most of cases, space problems are not met, since the magnetorotors carry magnets 1ⁱ interspaced by at least a 50 ÷ 70 % of their width, in order to avoid interferences among the magnetic fields. All around the engine 6 there is a plurality of free spaces between two adjacent cursors 14 supporting a certain number of overlaid magnets. In case that magnets 1ⁱ, by the effect of flux-baffles fixed thereto, may be contiguous, it will be sufficient to lose a certain percentage of power, eliminating opposite pairs of cursors 14. Given the relatively low temperatures, in the engine of the invention the lubricating system by means of an heat transfering fluid is normally not needed. Each pulsor, in fact, by the effect of the transversal scavenging air-jet, even if at a pressure of 3 Kg/cm², exerts a pressure against the cylinder wall corresponding approximately to 0,8 ÷ 1,5 Kg/cm², with a maximum piston velocity of about 12 m/sec. A correct choice of materials and of surface- treatments, as well as the eventual use of solid lubricants such as molybdenite, are therefore adequate specially when using diesel oil or similar essences as fuel (known to be self-lubricating).

Pulsor 5, and consequently cylinders 1, never support any pressure besides that mentioned above, and the limited pressure given by the seal rings, not supporting other different kinds of forces having components not parallel to the cylinders axes.

The present description is intended to give a wide enough explanation to let a skilled people build the engine according to the invention, by exploiting their specific experience in order to choose the best form and location of the various parts and of the various ducts, the materials to be used and so on.

One detail which the inventor suggests concerns the form of duct 29 of the scavenging air-jet: it will be useful to shape it as orientatively shown in fig. 11, in order to perform an efficient scavenge in the direction of the arrows also with a not high pressure and to be able to eventually exploit part of the same pressure (the part which, because of the tortuosness of the way does not transform itself into kinetic energy) as first stage of the compression inside the cylinder, or for creating a turbulence inside the cylinder.

As far as starting the engine is concerned, as already anticipated, it is useful to foresee to let the magnetorotor rotate for example by means of a manual operation through a device of known type (for instance, inertial), connected to a floor-type gearshift.

Magnets 2ⁱ, which are inactive at this stage, oscillate staying at an intermediate distance, between the field-limit and magnets 1, which does not generate undesirable Foucault effects, at the intersection point between the pressures curve and the attraction forces curve of the magnetic field.

Once the minimum rotation speed is reached, the first injection/ignition will take place, and the engine, from then on, will run itself by means of the control box 42. It is however obvious that, in the case of high magnetic-field intensity, a small electric device of known type may be connected to the drive-shaft, making it rotate anyway by a limited rotation angle, without having to effect compression cycles inside the cylinders.

From the above, it is understandable that the engine according to the invention, either when the vehicle is not going, or even just when the accelerator-pedal is totally released, is inactive and doesn't burn fuel (or emit exhaust gases).
It is of interest to note that, by quickly releasing the accelerator pedal, and deactivating (intending to slow-down the vehicle), the pulsors, they, devoid of the kinetic energy supplied by fuel, will follow, with decreasing stroke-length, trajectories no longer adapt to generate a working torque, but on the contrary, generate a braking torque, as said trajectories will cross the magnets attraction field in such a way as to slow-down the magnetorotor motion as well as the thereto connected drive-shaft 7.

By suitably programming the electronic control device, it is also possible to deliberately create, by means of the fuel injection, such trajectories, for example as the driver, after having quickly released the accelerator pedal, roughly presses the brake pedal (giving it a reference-acceleration based on which the control device is programmed).

By doing this, the vehicle is slowed down (braking-motor effect), in co-operation with the existing braking-system.

Thanks to the possibility to activate a selectable number of cylinders, with again variable power per cylinder without meeting the problems caused by the crankshaft, not present in a motor according to the invention, a gear box is in certain cases not strictly needed: also the reverse motion, for example, will be in some cases achievable by means of suitable trajectories (AKZ fig. 16).

In the remaining cases, a simple insertable reverse gear, or a two-three-gear gear-box will be adequate. The fuel consumption of the referenced engine, thanks to the best exploitation of the various kinds of energy used, is as said, very low: the theoretical fuel-consumption with a power of 82 HP is approximately one liter of fuel per 20 Km running at the maximum speed, and decreases then approximately with the speed cube, as it has been demonstrated in the present description.

The engine works, as previously stated, with a variable compression, increasing together with the increasing power, and with the need, as also said , to increase the fuel quantity. The resulting air volume inside the cylinders considerably exceeds the stoichiometrically required volume: consequently the substantial absence of CO, HC and of many nitrogen compounds whithin the gas is achieved, and a good combustion efficiency is also achieved at low speeds, with low compression ratios.

That, together with the very low consumption at low speeds and the inactivity when the vehicle is not in motion, makes it advantageous to use the engine for citytravelling as it produces a low pollution rate.

The economical and enviromental results achieved by this motor are immediately obvious: they add to the possibility of obtaining good acceleration at any intermediate speed without torque-amplification systems for heavy vehicles.

Especially adapted for the use on any kind of transportation-means: cars, aircrafts, ships, it is quite suitable for being used on a helicopter.

The drive shaft rotation speed (6 : 10 r/sec) is in fact, very close to the commonly adopted rotation speed of the propeller-shaft. The heat emitted by motor 6 by radiation can easily be kept from reaching the magnets 1 of the magnetorotor 3 by applying an insulating layer covered by a thin sheet of reflecting material to the inside of magnetorotor 3. The low level of heat eventually produced by the magnets because of parasitic currents or because of other energy losses is automatically removed by air by the effect of the pulsating motion of cursors 14 combined with the rotative motion of magnetorotor 3.

An interesting possibility of varying the trajectories of the motion of magnets 2ⁱ fixed on cursors 14 in a further suitable way deserves an explanation. It can be achieved by varying the distance between restituting systems 8 and cursors 14 for a constant magnetorotor 3 rotation speed. By doing so, a more advantageous torque/speed curve is obtained. Considering fig. 17, the device shows, in one of the preferred embodiments, a stiff member 40 fixed to the radially outer ends of elements 8 elastic to the compression stress spring (in the case shown) which have to take up the maximum kinetic energy of a pulsor 5 or of a group of mechanically connected pulsors by means of a prefixed maximum set.

A flat plate 37, parallel to the slidable facing member 40, is interposed between same member 40 and a fixed structure 20, said plate carrying at least one wedge-shaped projecting part 37′, the thickness of which decreases along its longitudinal axis, at positions corresponding to each elastic element 8 or group of elastic elements.

By allowing said plate 37 to slide longitudinally with respect to member 40, the wedge-shaped projecting parts 37′ fit between member 40 and structure 20, modifying the distance between them from zero up to the maximum thickness of the wedge-shaped projecting part. Such a projecting part 37′, when not totally inserted between member 40 and structure 20, projects sideways through holes 40′ formed on same member. Many methods can be used to allow said slidable plate 37 to slide, for example, fixing one end 37˝ thereof to the keeper of an electromagnet 38, whose induction current is controlled by the engine's control box, which determines its stroke according to the angular speed or acceleration, to the instructions given by the driver, or to the length of the compression stroke run in the last cycle, or to many of these factors combined with each other.

It is possible to modify the device by connecting springs 8 to related cursors 14 instead of to the stiff member 40.
Said modification doesn't need any further explanation, as it would appear obvious to people skilled in the art.

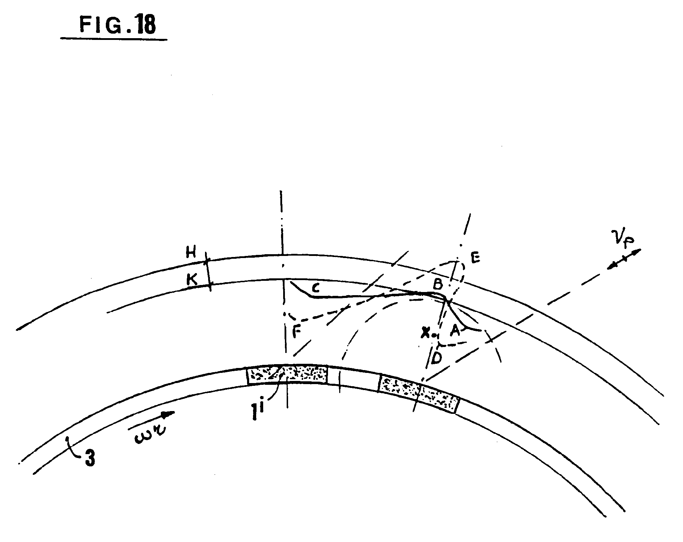

The advantages offered by the invention are evident. Referring to fig. 18, the best trajectory normally achievable with a magnetorotor (ABC), or with the use of above described device (DEF) for a given rotation speed are shown: the velocity vₚ of pulsor 1, in the represented case, is multiplied by more than three, and accordingly the compression work performed by pulsor 1 is multiplied by 3 ; consequently the approach-stroke of the magnets increases by approximately $\text{√3 = 1,75 times}$ , and that causes a power- and torque-increase, for the given rotation speed ωr of the magnetorotor, of about 3 times, as previously mentioned.
(The length of segment HK is equal to the thickness of wedge-shaped projection 37′). By suitably dimensioning every part, it is possible to obtain the maximum torque for any rotation speed used.

A further method for moving slidable plate 37 may be by connecting it to a pneumatic, oil-operated or similarly operated piston, "driven" by the control-box, or to insert a sealed expandable chamber between member 40 and fixed structure 20, regulating, again by means of the control-box, its thickness, or to use other methods not shown in the drawings.

As already mentioned, in the (frequent) cases wherein the above described device is used, it may be useful to have the ability to shut the scavenge-air inlet valve (25) by means of one of the several known systems, when pulsor (5) has reached a prefixed position during its outward stroke.
So that inadequate amounts of compressed scavenge-air are not wasted, worsening the global efficiency rate of the engine.
From what has been described up this point, it can be deduced that, in a magnetorotors-engine comprising the latter described device, it is possible to perform the following functions:
- at constant magnetorotor rotation speed, to vary the torque, hence the power on the drive-shaft, by modifying the cursors stroke-length and the fuel amount, or
- achieving a constant torque for different rotation speeds of the magnetorotor, i.e. of the drive shaft, by keeping the fuel-amount per cycle substantially constant and modifying the cursors stroke-length.

It is clearly possible, by means of a suitably programmed control-box, to effect a wide interpolation, therefore obtaining, for each use condition of the engine, the required torque and power.

## Claims

1. Method for moving a first member bearing a first group of permanent magnets of the same polarity (1ⁱ) along a circular trajectory by moving, by a reciprocating motion, a second member, or a plurality of second members, bearing a second group of permanent magnets (2ⁱ) and having no mechanical connection to the first member, along a rectilinear trajectory which is transverse to said circular trajectory, said first member being a magnetorotor (3), connected to a drive shaft (7) and bearing the permanent magnets (1ⁱ) fixed around its outer circumference, said first member moving according to a rotative motion around an axis which is perpendicular to the plane on which the permanent magnets (2ⁱ) of said second member are radially distributed, and passes through the geometrical center of said circumference, said second member, or plurality of second members, having the permanent magnets (2ⁱ) distributed around said geometrical center, facing the first group of permanent magnets (1ⁱ) and being mechanically connected to the piston(s) (5), which may also be called pulsor(s), of an internal combustion engine, and energy restituting means (8) that are compressed by the move-away motion of the pistons consequent to the gas combustion and expansion, reciprocating the motion during the return and compression phase of the engine, characterized by the fact that it comprises:
having said second group of magnets (2ⁱ) of the second member(s) entering the field of magnetic attraction with said first group of permanent magnets (1ⁱ) as an effect of the action of the energy restituting means (8) on the piston(s), that are connected to them, and suddenly moving them away from the magnetic field, along the same rectilinear trajectory, just before the poles mesh, as an effect of the move-away motion of the piston(s) consequent to the gas combustion and expansion, said first (1ⁱ) and second (2ⁱ) group of magnets facing one another with opposing polarity, and said internal combustion engine having the combustion chamber (9) directed toward said geometrical center.

2. Method according to claim 1 wherein the magnets of either the first or second member are ferromagnetic parts that have a linked magnetic field of intensity substantially equal to zero.

3. Method according to claim 1 or 2 wherein the pistons are driven by ball bushings.

4. Apparatus which comprises:
(a) a first member which is a magnetorotor (3), bearing a first group of permanent magnets (1ⁱ) of the same polarity that are fixed around its outer circumference, that moves according to a rotative motion about an axis which is perpendicular to the plane on which the permanent magnets (2ⁱ) of a second member, or a plurality of second members, are radially distributed and passes through the geometrical center of said circumference, said first member being connected to a drive shaft (7);
(b) a second member, or a plurality of second members, having no mechanical connection to the first member, bearing a second group of magnets (2ⁱ), facing the first group of permanent magnets (1ⁱ) and moving, by a reciprocating motion, along a rectilinear trajectory which is transverse to the circular trajectory of the first member;
(c) an internal combustion engine with at least one combustion chamber (9) and at least one piston (5), which may also be called a pulsor;
(d) energy restituting means (8) that are compressed during the move-away motion of the piston(s) after the gas combustion and expansion and reciprocate the motion during the return and compression phase of the engine cycle;
characterized in that said first group of permanent magnets (1ⁱ) faces said second group of permanent magnets (2ⁱ) with opposing polarity, the second member moving thus the first member as a result of the magnetic attraction between said two groups of permanent magnets (1ⁱ, 2ⁱ), and in that said internal combustion engine has its combustion chamber (9) directed toward the said geometrical center, said second group of magnets (2ⁱ) of the second member(s) entering the field of magnetic interaction with said first group of permanent magnets (1ⁱ) as an effect of the action of the energy restituting means (8) on the piston(s) that are connected to them and suddenly moving them away from the magnetic field, along the same rectilinear trajectory, just before the poles mesh, as an effect of the move-away motion of the piston(s) consequent to the gas combustion and expansion.

5. Apparatus according to claim 4 wherein the magnets of either the first or second member are ferromagnetic parts that have a linked magnetic field of intensity substantially equal to zero.

6. Apparatus as claimed in claim 4 or 5, wherein the internal combustion engine or engines are two-stroke star-engines, and wherein the pistons (5), which may also be called pulsors, are housed inside cylinders (9) with their heads (5′) facing the star-center, as the combustion chambers are located between said heads (5′) and the star-center, the carrying members (45) of the pistons (5) being adapted to effect a kinematic connection between said pistons (5) and members (14) named cursors, on which the reciprocating magnets 2ⁱ, are fixed, this engine being called a "reversed-star-engine".

7. Apparatus according to claim 6, wherein the lid (9˝) of each cylinder (9) is provided with one or many air-ducts (46) and with a pre-chamber (44) in which the ignition electrodes (33) and the fuel injector (43) are installed, all the parts being shaped and dimensioned in such a way, that a prefixed amount of fuel, injected at a predetermined pressure by said injector (43), reaches said electrodes (33) after having mixed itself with the stoichiometric amount of air drawn through the air-ducts (46) and inside the pre-chamber (44).

8. Apparatus as claimed in claim 7, characterized in that the exhausted compound scavenge is effected in each cylinder (9), after an explosion, by an air-jet directed substantially transverse to the axis of same cylinder (9), which comes from a device capable of compressing air and sending compressed air into each of said cylinders (9).

9. Apparatus as claimed in claim 8, characterized in that the device capable of compressing air is a compressor, mechanically connected to drive-shaft (7) or to a derivation thereof.

10. Apparatus as claimed in claim 8, wherein said device capable of compressing air is a compressor operated by an electrical motor.

11. Apparatus as claimed in claim 8, wherein the device capable of compressing air is a volumetric compressor, formed by a plurality of pistons (5), operating in accordance with the rectilineal reciprocating motion of engine pulsors (6), to which they are mechanically connected.

12. Apparatus as claimed in claim 8, wherein the compression of air is effected by both a compressor, which is either mechanically connected to drive-shaft (7) or electrically operated, and by a plurality of pistons (26), integrating their action according to the required compressed air flow-rate and pressure.

13. Apparatus as claimed in any one of claims 8 to 12, characterized in that the exhausted compound scavenge-air is immitted by the compressor into a reservoir (plenum chamber) (32), and subsequently into cylinders (9).

14. Apparatus as claimed in any one of claims 4 to 13, characterized in that fuel injection and ignition in each cylinder take place by effect of the action of an electronic control-system, called a "control box" (42 fig. 15).

15. Apparatus as claimed in claim 14, characterized by the fact that the timing of the fuel injection and ignition inside the explosion chamber are determined by said control box according to the mutual position occupied by reference-members located on magnetorotor (3) and on a non-rotating part.

16. Apparatus as claimed in claim 15, characterized by the fact that said control-box (42) effects said timing and the regulation of the amount of fuel immitted for a single explosion depending on the peripheral velocity, angular acceleration, of the magnetorotor (3) or on the position occupied by one or more driver-operated drive-members, or on the compression-stroke runnen in the last explosion, or a combination thereof.

17. Apparatus as claimed in any one of claims 4 to 16, characterized by the axis of motion of the pistons (or pulsors) (5) being inclined with respect to the outer surface of magnetorotor (3) magnets in order that the relative-motion trajectories of magnets (2ⁱ) with respect to same magnetorotor (3) have prefixed inclinations, said magnets being (2ⁱ) pushed by pulsors (5) during their out-ward stroke from magnets 1ⁱ, and by restituting-system (8) and by the magnetic field during the related approach-stroke (fig. 9).

18. Apparatus according to any one of claims 4 to 17, wherein the mechanical energy restituting-system, coupled to engine (6) pulsors (5), consists of a plurality of elastic-to-compression elements or group of elements, located circumferencially around magnetorotor (3) in correspondence of each pulsor (5) or of each group of interconnected pulsors, the longitudinal axis of each element (8) being aligned with or parallel to the axis of related pulsor or pulsors (5), and each element (8) having its radially outer end turned toward a fixed structure (20), characterized in that all said groups of elastic elements (8) are connected by a rigid member (40) and in that a member (37) is interposed between member (40) and fixed structure (20), said member (37) being able to modify the distance between them while the magnetorotor (3) is operational.

19. Apparatus according to claim 18, characterized in that the member interposed between said member (40) and said fixed structure (20) is a flat plate (37), parallely facing said member (40), plate provided with at least a wedge-shaped proiecting part (37′), whose thickness increases along its longitudinal axis, located in correspondence of each said group of elastic elements (8), and in that said member (40) carries a plurality of notches (40′), inside which said projecting parts (37′) can slide while effecting their stroke.

20. Apparatus as claimed in claim 19, wherein each one of said plates (37) is connected to a device allowing them to longitudinally slide with respect to above cited member (40).

21. Apparatus as claimed in claim 20, wherein the device capable of allowing each one of said plates (37) to slide is an electromagnet bucked by a counter-acting spring (39).

22. Apparatus as claimed in claim 20, characterized in that said device (38) is a pneumatic or oil-operated cylinder.

23. Apparatus as claimed in either of claim 21 or 22, wherein a prefixed length sliding-stroke of said plates (37) is generated by one of said devices, upon control of the electronic control-box (42) coupled to magnetorotor (3), according to magnetorotor's angular speed or acceleration, or to instructions given by a driver, or to the length of the compression-stroke runnen by pulsors (5) in the last explosion, or to more than one of above cited factors combined to each other.

24. Apparatus as claimed in any one of claims 18 to 23, characterized in that said elastic elements (8) are flexion or torsion springs having a rigidity coefficient such that, for the maximum set of a group of springs, the maximun kinetic energy of pulsor or pulsors (5) related thereto is absorbed.

25. Use of the apparatus according to any one of claims 4 to 24 for forming the engine for water, land, air propulsion or for other appliances.

## Patentansprüche

1. Verfahren zum Bewegen eines ersten Elements, das eine erste Gruppe von Permanentmagneten derselben Polarität (1ⁱ) trägt, längs einer kreisförmigen Bahn durch Bewegen eines zweiten Elements oder mehrerer zweiter Elemente, die eine zweite Gruppe von Permanentmagneten (2ⁱ) tragen und keine mechanische Verbindung mit dem ersten Element aufweisen, durch Hin- und Herbewegen längs einer geradlinigen Bahn, die quer zur kreisförmigen Bahn verläuft, wobei das erste Element ein Magnetorotor (3) ist, der mit einer Antriebswelle (7) verbunden ist und die Permanentmagneten (1ⁱ) trägt, die längs seines äußeren Umfangs befestigt sind, wobei sich das erste Element in einer Drehbewegung um eine Achse bewegt, die zu der Ebene, in der die Permanentmagneten (2ⁱ) des zweiten Elements radial verteilt sind, senkrecht ist und durch den geometrischen Mittelpunkt der Umfangslinie verläuft, wobei das zweite Element oder die mehreren zweiten Elemente, deren Permanentmagneten (2ⁱ) um den geometrischen Mittelpunkt verteilt sind, der ersten Gruppe von Permanentmagneten (1ⁱ) zugewandt sind und mit dem (den) Kolben (5), der (die) auch Pulsor(en) genannt werden kann (können), eines Verbrennungsmotors sowie mit Energierückgewinnungsmitteln (8) mechanisch verbunden sind, die durch die Auswärtsbewegung der Kolben infolge der Gasverbrennung und -ausdehnung komprimiert werden und sich während der Rückkehr- und Kompressionsphase des Motors hin und her bewegen, dadurch gekennzeichnet, daß: die zweite Gruppe von Magneten (2ⁱ) der (des) zweiten Elemente(s) in das Feld der magnetischen Anziehung mit der ersten Gruppe von Permanentmagneten (1ⁱ) als Folge der Wirkung der Energierückgewinnungsmittel (8) des (der) Kolben, die mit ihnen verbunden sind, eintritt und sich als Folge der Auswärtsbewegung des (der) Kolben infolge der Gasverbrennung und -ausdehnung längs der gleichen geradlinigen Bahn plötzlich aus dem Magnetfeld heraus bewegt, direkt bevor die Pole in Kontakt gelangen, wobei die erste (1ⁱ) und die zweite (2ⁱ) Gruppe von Magneten einander mit entgegengesetzter Polarität zugewandt sind und die Verbrennungskammer (9) des Verbrennungsmotors zum geometrischen Mittelpunkt gerichtet ist.

2. Verfahren nach Anspruch 1, bei dem die Magneten entweder des ersten oder des zweiten Elements ferromagnetische Teile sind, die ein gekoppeltes Magnetfeld besitzen, dessen Intensität im wesentlichen gleich null ist.

3. Verfahren nach Anspruch 1 oder 2, bei dem die Kolben durch Kugellaufbuchsen angetrieben werden.

4. Vorrichtung, die enthält:
(a) ein erstes Element, das ein Magnetorotor (3) ist, der eine erste Gruppe von Permanentmagneten (1ⁱ) der gleichen Polarität, die um dessen äußeren Umfang befestigt sind, trägt, das sich in einer Drehbewegung um eine Achse bewegt, die zu der Ebene, in der die Permanentmagneten (2ⁱ) eines zweiten Elements oder mehrerer zweiter Elemente radial verteilt sind, senkrecht ist und durch den geometrischen Mittelpunkt der Umfangslinie verläuft, und das mit einer Antriebswelle (7) verbunden ist;
(b) ein zweites Element oder mehrere zweite Elemente, die keine mechanische Verbindung mit dem ersten Element aufweisen und eine zweite Gruppe von Magneten (2ⁱ) tragen, die der ersten Gruppe von Permanentmagneten (1ⁱ) zugewandt sind und sich durch Hin- und Herbewegen längs einer geradlinigen Bahn bewegen, die quer zur kreisförmigen Bahn des ersten Elements verläuft;
(c) einen Verbrennungsmotor, der wenigstens eine Verbrennungskammer (9) und wenigstens einen Kolben (5), der auch Pulsor genannt werden kann, besitzt;
(d) Energierückgewinnungsmittel (8), die während der Auswärtsbewegung des (der) Kolben nach der Gasverbrennung und -ausdehnung komprimiert werden und sich während der Rückkehr- und Kompressionsphase des Motorzyklus hin und her bewegen;
dadurch gekennzeichnet, daß die erste Gruppe von Permanentmagneten (1ⁱ) der zweiten Gruppe von entgegengesetzte Polarität besitzenden Permanentmagneten (2ⁱ) zugewandt ist, wobei somit das zweite Element das erste Element infolge der magnetischen Anziehung zwischen den beiden Gruppen von Permanentmagneten (1ⁱ, 2ⁱ) bewegt, und daß die Verbrennungskammer (9) des Verbrennungsmotors zum geometrischen Mittelpunkt gerichtet ist, wobei die zweite Gruppe von Magneten (2ⁱ) der (des) zweiten Elemente(s) in das Feld der magnetischen Wechselwirkung mit der ersten Gruppe von Permanentmagneten (1ⁱ) als Folge der Wirkung der Energierückgewinnungsmittel (8) des (der) Kolben, die mit ihnen verbunden sind, eintritt und sich direkt vor einem Eingriff der Pole als Folge der Auswärtsbewegung des (der) Kolben infolge der Gasverbrennung und -ausdehnung längs der gleichen geradlinigen Bahn plötzlich aus dem Magnetfeld hinaus bewegen.

5. Vorrichtung nach Anspruch 4, bei der die Magneten des ersten oder des zweiten Elements ferromagnetische Teile sind, die ein gekoppeltes Magnetfeld besitzen, dessen Intensität im wesentlichen gleich null ist.

6. Vorrichtung nach Anspruch 4 oder 5, bei der der Verbrennungsmotor oder die Verbrennungsmotoren ZweitaktSternmotoren sind und bei der die Kolben (5), die auch Pulsoren genannt werden können, in Zylindern (9) untergebracht sind, wobei ihre Köpfe (5′) dem Sternzentrum zugewandt sind, wenn die Verbrennungskammern zwischen den Köpfen (5′) und dem Sternzentrum angeordnet sind, wobei die Tragelemente (45) der Kolben (5) so beschaffen sind, daß sie zwischen den Kolben (5) und den Läufer genannten Elementen (14), an denen die hin und her sich bewegenden Magnete 2ⁱ befestigt sind, eine kinematische Verbindung bewirken, wobei dieser Motor "Umkehr-Sternmotor" genannt wird.

7. Vorrichtung nach Anspruch 6, bei der der Deckel (9˝) jedes Zylinders (9) mit einem oder vielen Luftkanälen (46) und mit Vorkammern (44), in denen die Zündelektroden (33) und die Kraftstoffeinspritzeinrichtung (43) angeordnet sind, versehen ist, wobei sämtliche Teile in einer Weise geformt und bemessen sind, daß eine im voraus festgelegte Kraftstoffmenge, die mit einem vorgegebenen Druck durch die Einspritzeinrichtung (43) eingespritzt wird, die Elektroden (33) erreicht, nachdem sie sich selbst mit der stöchiometrischen Menge der durch die Luftleitungen (46) und in die Vorkammer (44) gesaugten Luft vermischt hat.

8. Vorrichtung nach Anspruch 7, dadurch gekennzeichnet, daß die Spülung des verbrannten Gemischs in jedem Zylinder (9) nach einer Explosion durch einen Luftstrahl bewirkt wird, der im wesentlichen quer zur Achse dieses Zylinders (9) orientiert ist und von einer Vorrichtung kommt, die Luft komprimieren und die komprimierte Luft in jeden der Zylinder (9) schicken kann.

9. Vorrichtung nach Anspruch 8, dadurch gekennzeichnet, daß die Vorrichtung, die Luft komprimieren kann, ein Kompressor ist, der mit der Antriebswelle (7) oder einer Abzweigung hiervon mechanisch verbunden ist.

10. Vorrichtung nach Anspruch 8, bei der die Vorrichtung, die Luft komprimieren kann, ein Kompressor ist, der mittels eines Elektromotors betrieben werden kann.

11. Vorrichtung nach Anspruch 8, bei der die Vorrichtung, die Luft komprimieren kann, ein Verdrängungskompressor ist, der durch mehrere Kolben (5) gebildet ist, die entsprechend der geradlinigen Hin- und Herbewegung der Motor-Pulsoren (6) arbeiten, mit denen sie mechanisch verbunden sind.

12. Vorrichtung nach Anspruch 8, bei der die Kompression der Luft sowohl mittels eines Kompressors, der entweder mechanisch mit der Antriebswelle (7) verbunden ist oder elektrisch betätigt wird, als auch mittels mehrerer Kolben (26) bewirkt wird, die ihre Wirkung entsprechend der geforderten Strömungsrate und des Drucks der komprimierten Luft koordinieren.

13. Vorrichtung nach irgendeinem der Ansprüche 8 bis 12, dadurch gekennzeichnet, daß die Luft zum Spülen des verbrannten Gemischs durch den Kompressor in einen Vorratsraum (Plenumkammer) (32) und anschließend in Zylinder (9) eingeleitet wird.

14. Vorrichtung nach irgendeinem der Ansprüche 4 bis 13, dadurch gekennzeichnet, daß die Einspritzung und die Zündung des Kraftstoffs in jedem Zylinder infolge der Wirkung eines elektronischen Steuersystems, das "Steuerkasten" (42, Fig. 15) genannt wird, stattfindet.

15. Vorrichtung nach Anspruch 14, gekennzeichnet durch die Tatsache, daß die Zeitsteuerung der Einspritzung und der Zündung des Kraftstoffs in der Explosionskammer durch den Steuerkasten entsprechend der gegenseitigen Position bestimmt wird, die von Bezugselementen eingenommen wird, die sich am Magnetorotor (3) und an einem nicht rotierenden Teil befinden.

16. Vorrichtung nach Anspruch 15, gekennzeichnet durch die Tatsache, daß der Steuerkasten (42) die Zeitsteuerung und die Regulierung der für eine einzige Explosion eingeleiteten Kraftstoffmenge in Abhängigkeit von der Umfangsgeschwindigkeit und der Winkelbeschleunigung des Magnetorotors (3) oder von der Position, die von einem oder mehreren treiberbetätigten Treiberelementen eingenommen wird, oder von Kompressionshub der letzten Explosion oder einer Kombination hiervon ausführt.

17. Vorrichtung nach irgendeinem der Ansprüche 4 bis 16, dadurch gekennzeichnet, daß die Achse der Bewegung der Kolben (oder Pulsoren) (5) in bezug auf die äußere Oberfläche der Magneten des Magnetorotors (3) geneigt ist, damit die Relativbewegungsbahnen der Magneten (2ⁱ) in bezug auf diesen Magnetorotor (3) im voraus festgelegte Neigungen besitzen, wobei die Magneten (2ⁱ) während der Auswärtshübe der Pulsoren (5) von den Magneten (1ⁱ) durch die Pulsoren (5) und während des zugehörigen Annäherungshubs durch das Rückgewinnungssystem (8) und das Magnetfeld geschoben werden (Fig. 9).

18. Vorrichtung nach irgendeinem der Ansprüche 4 bis 17, bei dem das System zur Rückgewinnung mechanischer Energie, das mit den Pulsoren (5) des Motors (6) gekoppelt ist, aus mehreren elastisch komprimierbaren Elementen oder Elementgruppen besteht, die sich am Umfang um den Magnetorotor (3) in Entsprechung mit jedem Pulsor (5) oder mit jeder Grüppe von miteinander verbundenen Pulsoren angeordnet sind, wobei die Längsachse jedes Elements (8) auf die Achse des betreffenden Pulsors oder der betreffenden Pulsoren (5) ausgerichtet oder zu dieser parallel ist, und wobei jedes Element (8) mit seinem radial äußeren Ende zu einer festen Struktur (20) gewandt ist, dadurch gekennzeichnet, daß sämtliche Gruppen elastischer Elemente (8) mittels eines starren Elements (40) verbunden sind und daß zwischen das Element (40) und die festeStruktur (20) ein Element (37) eingefügt ist, das den Abstand zwischen ihnen während des Betriebs des Magnetorotors (3) verändern kann.

19. Vorrichtung nach Anspruch 18, dadurch gekennzeichnet, daß das zwischen das Element (40) und die feste Struktur (20) eingefügte Element eine flache Platte (37) ist, die zum Element (40) parallel und diesem zugewandt ist, wobei die Platte mit wenigstens einem keilförmigen, vorstehenden Teil (37′) versehen ist, dessen Dicke entlang seiner Längsachse ansteigt und das in Entsprechung mit jeder Gruppe von elastischen Elementen (8) angeordnet ist, und daß das Element (40) mehrere Kerben (40′) trägt, in denen die vorstehenden Teile (37′) gleiten können, wenn sie ihren Hub ausführen.

20. Vorrichtung nach Anspruch 19, bei der jede der Platten (37) mit einer Vorrichtung verbunden ist, die ihnen ein Gleiten in Längsrichtung in bezug auf das obenerwähnte Element (40) ermöglicht.

21. Vorrichtung nach Anspruch 20, bei der die Vorrichtung, die jeder der Platten (37) ein Gleiten ermöglichen kann, ein Elektromagnet ist, auf den in entgegengesetzter Wirkung eine Gegenwirkungsfeder (39) wirkt.

22. Vorrichtung nach Anspruch 20, dadurch gekennzeichnet, daß die Vorrichtung (38) ein mittels Luftdruck oder mittels Öl betätigter Zylinder ist.

23. Vorrichtung nach irgendeinem der Ansprüche 21 oder 22, bei der von einer der Vorrichtungen aufgrund der Steuerung des mit dem Magnetorotor (3) gekoppelten elektronischen Steuerkastens (42) entsprechend der Winkelgeschwindigkeit oder Winkelbeschleunigung des Magnetorotors oder entsprechend von einem Treiber ausgegebenen Befehlen oder entsprechend der Länge des von den Pulsoren (5) bei der letzten Explosion durchlaufenen Kompressionshubs oder entsprechend einer Kombination mehrerer der obenerwähnten Faktoren ein Gleithub der Platten (37) mit im voraus festgelegter Länge erzeugt wird.

24. Vorrichtung nach irgendeinem der Ansprüche 18 bis 23, dadurch gekennzeichnet, daß die elastischen Elemente (8) Biege- oder Torsionsfedern sind, die einen Steifigkeitskoeffizienten besitzen, derart, daß für den maximalen Satz einer Gruppe von Federn die maximale kinetische Energie des Pulsors oder der Pulsoren (5), die hierauf bezogen sind, absorbiert wird.

25. Verwendung der Vorrichtung nach irgendeinem der Ansprüche 4 bis 24 für die Bildung des Motors für Wasser- Land- oder Luftantrieb oder für andere Anwendungen.

## Revendications

1. Procédé pour déplacer un premier élément portant un premier groupe d'aimants permanents de la même polarité (1 ) le long d'une trajectoire circulaire en déplaçant, selon un mouvement de va-et-vient, un second élément, ou plusieurs seconds éléments, portant un second groupe d'aimants permanents (2 ) et n'ayant pas de liaison mécanique avec le premier élément, selon une trajectoire rectiligne qui est transversale à la dite trajectoire circulaire, le dit premier élément étant un magnétorotor (3), relié à un arbre d'entraînement (7) et portant les aimants permanents (1 ) fixés le long de sa circonférence extérieure, le dit premier élément se déplaçant selon un mouvement de rotation autour d'un axe perpendiculaire au plan dans lequel sont distribués les aimants permanents (2 ) du dit second élément et passant par le centre géométrique de la dite circonférence, le dit second élément, ou les dits plusieurs seconds éléments, présentant les aimants permanents (2 ) distribués autour du dit entre géométrique, faisant face au premier groupe d'aimants permanents (1 ) et étant relié mécaniquement au(x) piston (s) (5), qu'on peut aussi appeler pulseur (s), d'un moteur à combustion interne, et des dispositifs de restitution d'énergie (8) qui sont comprimés par le déplacement d'éloignement des pistons résultant de la combustion et de l'expansion des gaz, en renversant le mouvement pendant la phase de retour et de compression du moteur, caractérisé en ce qu'il comprend :
le fait que le second groupe d'aimants (2 ) du second élément entre dans le champ d'attraction magnétique par le premier groupe d'aimants permanents (1 ) sous l'effet de l'action du dispositif de restitution d'énergie (8) sur le(s) piston(s) qui lui est (sont) relié(s), puis les éloigne soudainement du champ magnétique, le long de la même trajectoire rectiligne, juste avant que les pôles coopèrent, sous l'effet du déplacement d'éloignement du(des) piston(s) résultant de la combustion et de l'expansion des gaz, les premier (1 ) et second (2 ) groupes d'aimants se faisant face avec des polarités opposées, et le dit moteur à combustion interne ayant sa chambre de combustion (9) dirigée vers le dit centre géométrique.

2. Procédé selon la revendication 1, dans lequel les aimants du premier ou du second élément sont des parties ferromagnétiques qui ont un champ d'intensité magnétique uni sensiblement égal à zéro.

3. Procédé selon la revendication 1 ou 2, dans lequel les pistons sont entraînés par des douilles à billes.

4. Appareil comprenant :
a) un premier élement qui est un magnétorotor (3), portant un premier groupe d'aimants permanents (1 ) de la même polarité qui sont fixés sur sa circonférence extérieure, qui se déplace selon un mouvement de rotation autour d'un axe qui est perpendiculaire au plan dans lequel les aimants permanents (2 ) d'un second élément, ou de plusieurs seconds éléments, sont distribués radialement et qui passe par le centre géométrique de cette circonférence, le dit premier élément étant relié à un arbre d'entraînement (7) ;
b) un second élément ou plusieurs seconds éléments non relié(s) mécaniquement au premier élément, portant un second groupe d'aimants (2 ), faisant face au premier groupe d'aimants permanents (1 ) et se déplaçant, d'un mouvement de va-et-vient, selon une trajectoire rectiligne qui est transversale à la trajectoire circulaire du premier élément ;
c) un moteur à combustion interne comportant au moins une chambre de combustion (9) et au moins un piston (5), qu'on peut aussi appeler pulseur ;
d) des dispositifs de restitution d'énergie (8) qui sont comprimés pendant le déplacement d'éloignement du (des) piston(s) après la combustion et l'expansion dez gaz, et qui inversent le déplacement pendant la phase de retour et de compression du cycle du moteur;
caractérisé en ce que le dit premier groupe d'aimants permanents (1 ) fait face au dit second groupe d'aimants permanents (2 ) en opposant les polarités, le second élément déplaçant ainsi le premier élément comme résultat de l'attraction magnétique entre les dits deux groupes d'aimants permanents (1 ,2 ), et en ce que le dit moteur à combustion interne a sa chambre à combustion interne (9) dirigée vers le dit centre géométrique, le dit second groupe d'aimants (2 ) du (des) second(s) élément(s) entrant dans le champ d'interaction magnétique avec le dit premier groupe d'aimants permanents (1 ) sous l'effet de l'action des dispositifs de restitution d'énergie (8) sur le(s) piston(s) qui leur est(sont) relié(s), et les éloignant soudainement du champ mangétique, le long de la même trajectoire rectiligne, juste avant que les pôles coopèrent, sous l'effet du déplacement d'écartement du(des) piston(s) en conséquence de la combustion et de l'expansion des gaz.

5. Appareil selon la revendication 4, dans lequel les aimants du premier ou du second groupe sont des parties ferromagnétiques ayant un champ magnétique uni d'une intensité sensiblement égale à zéro.

6. Appareil selon la revendication 4 ou 5, dans lequel le ou les moteurs à combustion interne sont des moteurs à deux temps en étoile, et dans lequel les pistons (5), qu'on peut aussi appeler pulseurs, sont logés à l'intérieur de cylindres (9) avec leurs têtes (5′) en regard du centre de l'étoile, les chambres de combustion sont disposées entre lesdites têtes (5 ) et le centre de l'étoile, les éléments de support (45) des pistons (5) étant conçus pour effectuer une liaison cinématique entre les dits pistons (5) et les éléments (14) nommés curseurs, sur lesquels sont fixés les aimants en va-et-vient (2 ), ce moteur étant appelé "moteur inversé en étoile".

7. Appareil selon la revendication 6, dans lequel le chapeau (9˝) de chaque cylindre (9) est pourvu d'un ou plusieurs conduits d'air (46) et d'une pré-chambre (44) dans laquelle sont installés les électrodes d'allumage (33) et l'injecteur de carburant (43), les formes et dimensions de toutes les parties étant telles qu'une quantité prédétermitée de carburant, injectée par le dit injecteur (43) à une pression prédéterminée, atteint les dites électrodes (33) après s'être mélangée avec la quantité stoechiométrique d'air puisée par l'intermédiaire des conduits d'air et à l'intérieur de la pré-chambre (44).

8. Appareil selon la revendication 7, caractérisé en ce que l'évacuation des composés expulsés s'effectue dans chaque cylindre (9), après une explosion, par un jet d'air dirigé sensiblement transversalement à l'axe de ce dit cylindre (9) et qui provient d'un dispositif capable de comprimer de l'air et d'envoyer l'air comprimé dans chacun des dits cylindres (9).

9. Appareil selon la revendication 8, caractérisé en ce que le dispositif capable de comprimer de l'air est un compresseur relié mécaniquement à l'arbre d'entraînement (7) ou à une dérivation de celui-ci.

10. Appareil selon la revendication 8, dans lequel le dit dispositif capable de comprimer de l'air est un compresseur actionné par un moteur électrique.

11. Appareil selon la revendication 8, dans lequel le dispositif capable de comprimer de l'air est un compresseur volumétrique, formé par plusieurs pistons (5), agissant selon le mouvement de va-et-vient rectiligne des pulseurs (6) du moteur, auxquels ils sont reliés mécaniquement.

12. Appareil selon la revendication 8, dans lequel l'air de compression est effectué à la fois par un compresseur, qui est soit relié mécaniquement à un arbre d'entraînement (7) soit actionné électriquement, et par plusieurs pistons (26), intégrant leur action selon la vitesse d'écoulement et la pression voulues d'air comprimé.

13. Appareil selon l'une quelconque des revendications 8 à 12, caractérisé en ce que l'air d'évacuation du composé expulsé est envoyé par le compresseur dans un réservoir (chambre de tranquilisation) (32), et ensuite dans des cylindres (9).

14. Appareil selon l'une quelconque des revendications 4 à 13, caractérisé en ce que l'injection et l'allumage du carburant dans chaque cylindre se produisent sous l'effet de l'action d'un système de commande électronique appelé boît de commande (42 figure 15).

15. Appareil selon la revendication 14, caractérisé par le fait que le minutage de l'injection et de l'allumage du carburant à l'intérieur de la chambre d'explosion est déterminé par la dite boîte de commande selon la position mutuelle occupée par des éléments de référence placés sur le magnétorotor (3) et sur une partie fixe en rotation.

16. Appareil selon la revendication 15, caractérisé par le fait que ladite boîte de commande (42) effectue le dit minutage et le réglage de la quantité de carburant envoyée pour une seule explosion, selon la vitesse périphérique, l'accélération angulaire du magnétorotor (3) ou selon la position occupée par un ou plusieurs éléments de commande actionnés par le conducteur, ou selon la course de compression parcourue lors de la dernière explosion, ou une combinaison de ces facteurs.

17. Appareil selon l'une quelconque des revendications 4 à 16, caractérisé par le fait que l'axe de déplacement des pistons (ou pulseurs) (5) est incliné par rapport à la surface extérieure des aimants du magnétorotor (3) de façon que les trajectoires de déplacement relatif des aimants (2 ) par rapport au même magnétorotor (3) aient des inclinaisons prédéterminées, les dits aimants (2 ) étant poussés par les pulseurs (5) pendant leur course vers l'extérieur à partir des aimants 1 , et par le système de restitution (8) et par le champ magnétique pendant la course de rapprochement correspondante (figure 9).

18. Appareil selon l'une quelconque des revendications 4 à 17, dans lequel le système de restitution d'énergie mécanique, couplé aux pulseurs (5) du moteur (6), consiste en plusieurs éléments élastiques à la compression ou groupes d'éléments, disposés circonférentiellement autour du magnétorotor (3) en correspondance de chaque pulseur (5) ou de chaque groupe de pulseurs reliés entre eux, l'axe longitudinal de chaque élément (8) étant aligné avec l'axe du pulseur ou des pulseurs (5) correspondants ou étant parallèle à cet axe, et chaque élément (8) ayant son extrémité extérieure radiale tournée vers une structure fixe (20), caractérisé en ce que tous les dits groupes d'éléments élastiques (8) sont reliés par un élément rigide (40) et en ce qu'un élément (37) est interposé entre l'élément (40) et la structure fixe (20), le dit élément (37) étant capable de modifier la distance les séparant alors que le magnétorotor est opérationnel.

19. Appareil selon la revendication 18, caractérisé en ce que l'élément interposé entre le dit élément (40) et la dite structure fixe (20) est une plaque plate (37), faisant face au dit élément (40) parallèlement à lui, cette plaque étant pourvue d'au moins une partie saillante (37′) formant coin, dont l'épaisseur augmente en suivant son axe longitudinal, étant disposée en correspondance de chaque dit groupe d'éléments élastiques (8), et en ce que le dit élément (40) porte plusieurs encoches (40′) dans lesquelles les dites parties saillantes (37′) peuvent coulisser pour effectuer leur course.

20. Appareil selon la revendication 19, dans lequel chacune des dites plaques (37) est reliée à un dispositif leur permettant de coulisser longitudinalement par rapport à l'élément (40) cité ci-dessus.

21. Appareil selon la revendication 20, dans lequel le dispositif permettant à chacune des dites plaques (37) de coulisser est un électro-aimant rappelé par un ressort (39).

22. Appareil selon la revendication 20, caractérisé en ce que le dit dispositif est un vérin pneumatique ou hydraulique.

23. Appareil selon l'une quelconque des revendications 21 ou 22, dans lequel une course de coulissement de longueur prédéterminée des dites plaques (37) est produite par l'un des dits dispositifs, sous la commande de la boîte de commande électronique (42) couplée au magnétorotor (3), selon la vitesse angulaire ou l'accélération du magnétorotor, ou selon des instructions données par le conducteur, ou selon la longueur de la course de compression parcourue par les pulseurs (5) lors de la dernière explosion, ou selon au moins deux des facteurs cités ci-dessus combinés entre eux.

24. Appareil selon l'une quelconque des revendications 18 à 23, caractérisé en ce que les dits éléments élastiques (8) sont des ressorts de flexion ou de torsion ayant un coefficient de rigidité tel que, pour le réglage maximum d'un groupe de ressorts, l'énergie cinétique maximum du pulseur ou des pulseurs (5) correspondants soit absorbée.

25. Utilisation de l'appareil selon l'une quelconque des revendications 4 à 24 pour former un moteur de propulsion sur eau, sur terre ou dans l'air, ou pour d'autres agencements.
